# EUROPEAN PATENT SPECIFICATION

(11) **EP 1 976 258 B1**
(45) Date of publication and mention of the grant of the patent: **07.02.2018**
(21) Application number: 08250716.1
(22) Date of filing: 03.03.2008
(51) Int. Cl.: H04N 1/00

(54) **Information processing apparatus and computer usable medium therefor**
Informationsverarbeitungsvorrichtung und computerverwendbares Medium dafür
Appareil de traitement d'informations et support utilisable par un ordinateur correspondant

(30) Priority: 30.03.2007 JP 2007095460
(43) Date of publication of application: 01.10.2008
(73) Proprietor: Brother Kogyo Kabushiki Kaisha, Nagoya-shi, Aichi-ken 467-8561 (JP)
(72) Inventor: Kudo, Yasuhiro, c/o Intellectual Property Department, Nagoya-shi Aichi-ken 467-8562 (JP)
(74) Representative: J A Kemp

(56) References cited:
- EP-A- 1 679 823
- EP-B- 1 089 189
- GB-A- 2 330 045
- JP-A- 2006 087 058
- US-A1- 2005 182 843

## Description

### Cross Reference to Related Application

This application claims priority from Japanese Patent Application NO. 2007-095460, filed on March 30, 2007, the entire subject matter of which is incorporated herein by reference.

### Background

### Technical Field

An aspect of the present invention relates to an information processing apparatus, which is capable of monitoring events occurring in the apparatus itself and providing client devices with information concerning the events, and a computer usable medium therefor.

### Related Art

Conventionally, an information processing apparatus capable of monitoring events which occur in the apparatus itself and providing a plurality of client devices with information concerning the events is known. An example of such an information processing apparatus is disclosed in Japanese Patent Provisional Publication 2006-87058. The information processing apparatus in the above-referenced publication provides the client devices with information concerning an event, which is relevant to the client devices when the event occurs in the information processing apparatus. Therefore, information concerning various events that may occur in the information processing apparatus is stored in association with information concerning each client device in a storage of the information processing apparatus so that the information concerning the event is provided to the associated client devices when the event occurs.

In the information processing apparatus, however, when a plurality of events occur substantially concurrently in a short period of time, the client devices may not be provided with the information concerning the events in chronological order. It is noted that the information concerning the events is transmitted from the information processing apparatus to the associated client devices regardless of communication status of each client device. Therefore, depending on the communication status of each client device, the information concerning the events may not necessarily received by the client devices in chronological order. If the information concerning the events is not delivered in chronological order, for example, the information processing apparatus may not recognize current status of the information processing apparatus itself; therefore, may not provide a correct response to the current status.

EP-A-1 089 189 describes a method for communicating an event message from a server connected to at least one peripheral device and at least one client via a network between a peripheral device and at least one client operably connected via a network. The means includes the server sending a message to any available peripheral device, responding to an event message from at least one peripheral device, responding to an acknowledgement message from at least one client, and responding to an expired timeout.

GB-A-2 330 045 describes an information matching system having managing equipment and managed equipment which are connected via a network, the managed equipment having means for monitoring its state for creating a notice or message with a sequence number informing the managing equipment of a change of its state and a controller for resending a log of a necessary notice or message to the managing equipment according to an instruction from the managing equipment, the managing equipment including a management information updating unit for checking whether the sequence number attached to the notice or message delivered from the managed equipment is successive or not, and a controller for giving a resending instruction of a log of a notice or message having the missing sequence number to the managed equipment.

### Summary

In view of the above, the present invention is advantageous in that an information processing apparatus, which is capable of monitoring events occurring the information processing apparatus itself and providing information concerning the events to the client devices in chronological order, and a computer usable medium therefore are provided.
According to an aspect of the invention, there is provided an information processing apparatus as defined in appended claim 1.

According to another aspect of the invention, there is provided a method to control an image processing apparatus as defined in appended claim 5. According to still another aspect of the invention, there is provided a computer usable medium having computer readable instructions as defined in appended claim 9. According to the above configurations, the information processing apparatus can notify the event information corresponding to the first event and the second event to the at least one client device in chronological order based on judgment made by the judging unit that the notification of the event information corresponding to the first event was completed normally.

### Brief Description of the Accompanying Drawings

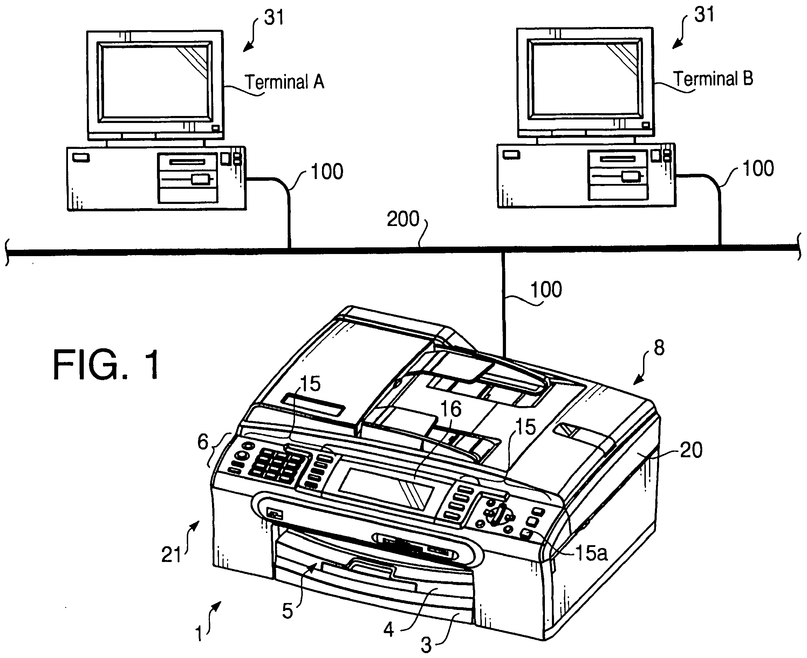

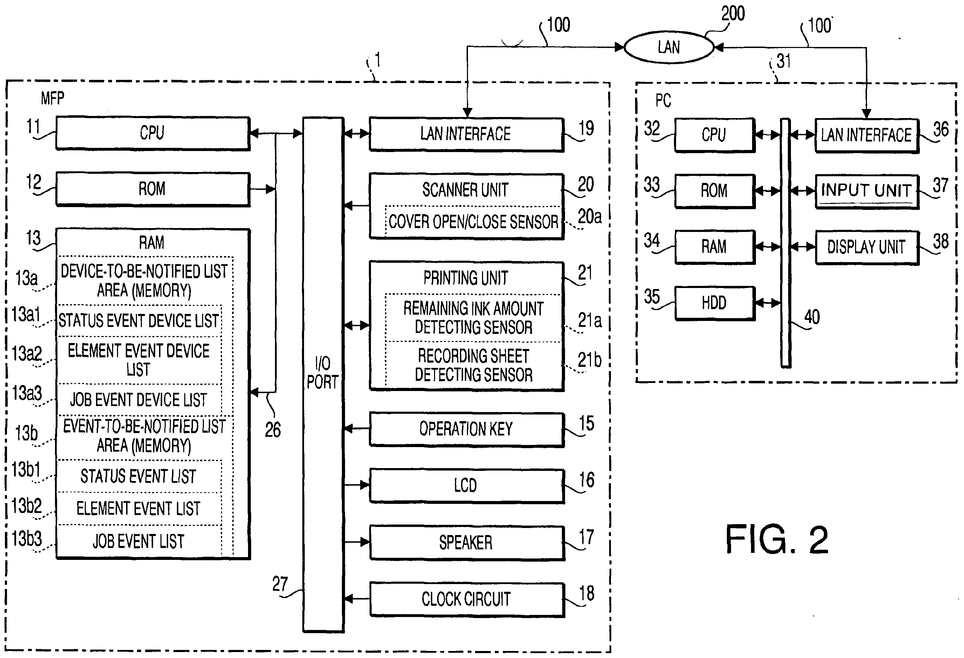

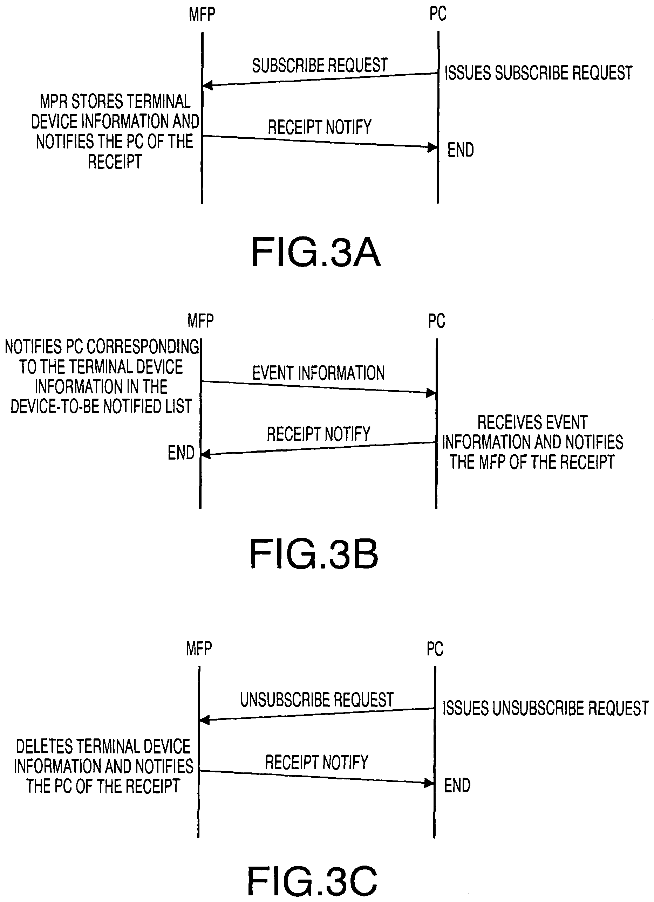

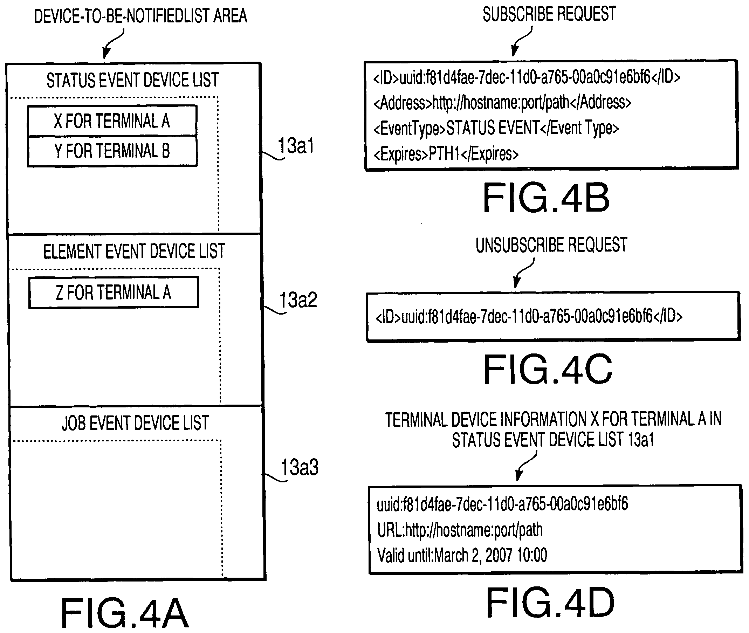

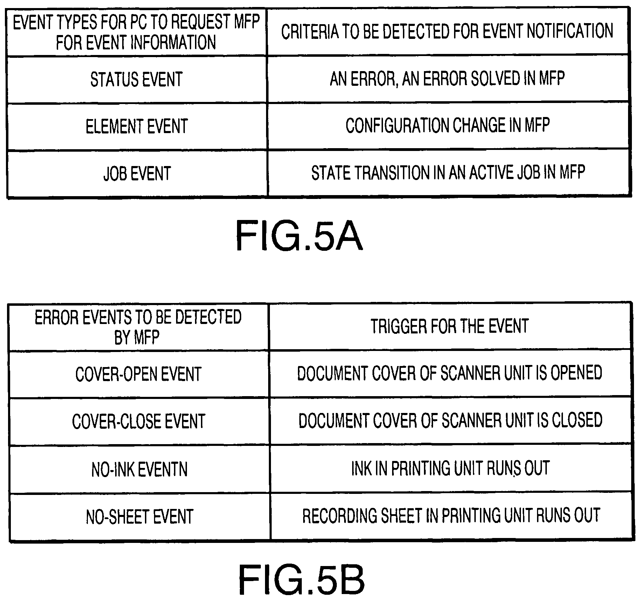

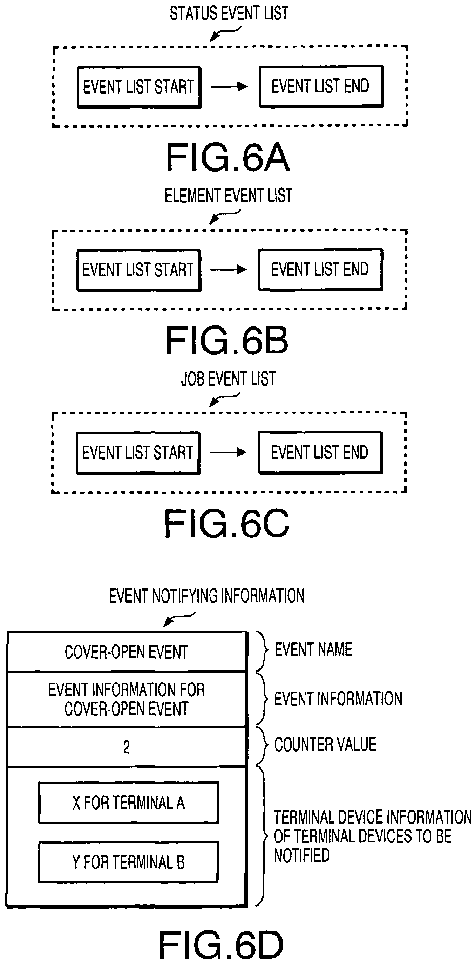

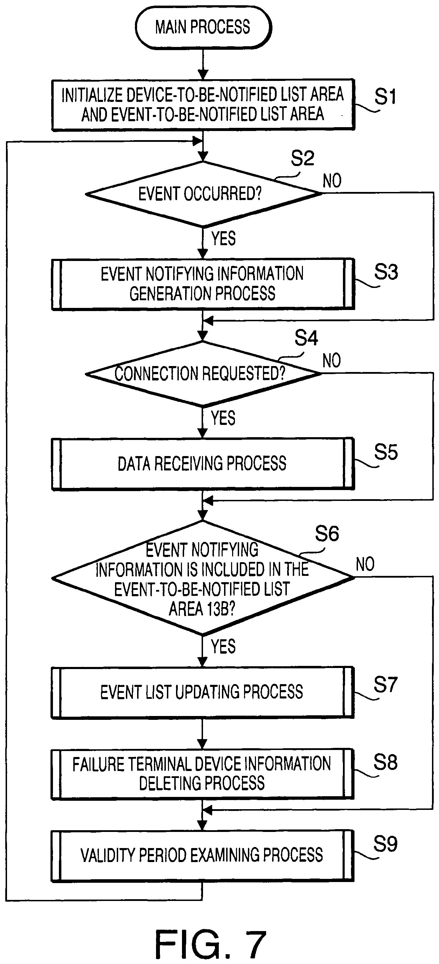

Fig. 1 schematically illustrates a configuration of an MFP (multi-function peripheral) and PCs (personal computers) according to an embodiment of the present invention.Fig. 2 is a block diagram to illustrate electrical configurations of the MFP and the PC according to the embodiment of the present invention.Figs. 3A-3C are ladder charts to illustrate data flows to be exchanged between the MFP and the PC according to the embodiment of the present invention.Figs. 4A-4D schematically illustrate contents of information to be exchanged between the MFP and the PC according to the embodiment of the present invention.Figs. 5A-5B schematically illustrate event types and events which can occur in the MFP according to the embodiment of the present invention.Figs. 6A-6C schematically illustrate list structures in status event lists according to the embodiment of the present invention. Fig. 6D illustrates contents of event notifying information according to the embodiment of the present invention.Fig. 7 is a flowchart to illustrate a main process of the MFP according to the embodiment of the present invention.
Fig. 8 is a flowchart to illustrate an event notifying information generating process according to the embodiment of the present invention.
Fig. 9 illustrates a flowchart of a data receiving process to be executed by the CPU of the MFP according to the embodiment of the present invention.
Fig. 10 is a flowchart to illustrate a terminal device information deleting process according to the embodiment of the present invention.
Fig. 11 is a flowchart to illustrate an event list updating process according to the embodiment of the present invention.
Fig. 12 is a flowchart to illustrate a failure terminal device information deleting process according to the embodiment of the present invention.
Fig. 13 is a flowchart to illustrate a validity period examining process according to the embodiment of the present invention.
Figs. 14A-14D schematically illustrate contents in the status event list according to the embodiment of the present invention.
Figs. 15A-15D schematically illustrate contents in the status event list according to the embodiment of the present invention.

### Detailed Description

Hereinafter, an embodiment according to an aspect of the present invention will be described with reference to the accompanying drawings.

Fig. 1 schematically illustrates a configuration of an MFP 1 and a plurality of PCs 31 according to an embodiment of the present invention. Specifically, the MFP 1 is illustrated in a perspective view in Fig. 1. The MFP 1 in the present embodiment is provided with a plurality of information processing functions such as a printing function, a scanning function, and a copying function.

As shown in Fig. 1, the MFP 1 and the plurality of PCs 31, which may be also referred to as terminal A and terminal B respectively) are connected with one another through a LAN 200 to exchange data therebetween. Therefore, a user may utilize the functions of the MFP 1 through any of the PCs 31 and the LAN 200. For example, a piece of printable data can be transmitted from the terminal A to the MFP 1 so that an image according to the printable data is printed by a printing unit 21 (see Fig. 2). For another example, an image formed on a sheet of paper can be read by a scanner unit 20 (see Fig. 2) to generate a piece of image data, and the image data can be transmitted from the MFP 1 to the terminal B to be modified.

In the MFP 1 according to the present embodiment, various state transitions in the MFP 1 are detected as events. Such events include an error and completion of a printing operation, for example. More specifically, the MFP 1 is provided with various sensors, such as a cover open/close sensor 20a, a remaining ink amount detecting sensor 21 a, and a recording sheet detecting sensor 21b (see Fig. 2), which outputs signals to indicate predetermined states of an operation and conditions of the MFP 1. These signals are monitored by a CPU 11 (see Fig. 2) at predetermined intervals. When the signals from the sensors vary, the CPU 11 detects the variation as an event.

The MFP 1 according to the present embodiment includes a document cover 8 on a top surface thereof and an operation panel 6 in a front portion of the top surface. The operation panel 6 includes operation keys 15, an LCD (liquid crystal display) 16, and a speaker unit 17 (see Fig. 2). The user is allowed to enter various instructions to the MFP 1 through the components in the operation panel 6.

The LCD 16 displays various information such as instructions to the user (e.g., operation menus), current status of an ongoing operation, a condition of the MFP 1. When an event occurs in the MFP 1, the PCs 31 are notified of the information concerning the event, and concurrently, the same information is displayed on the LCD 16 to be presented to the user.

Next, an electrical configuration of the MFP 1 will be described. Fig. 2 is a block diagram to illustrate an electrical configuration of the MFP 1 and one of the PCs 31 according to the embodiment of the present invention. The MFP 1 includes the CPU 11, a ROM 12, and a RAM 13, which are interconnected through a bus line 26, and the operation keys 15, the LCD 16, the speaker unit 17, a clock circuit 18, a LAN interface 19, the scanner unit 20, and the printing unit 21, which are interconnected through an I/O port 27. The clock circuit 18 includes an internal clock to indicate current date. The I/O port 27 and the CPU 11, the ROM 12, the RAM 13 are interconnected through the bus line 26.

The CPU 11 controls operations of each of the components in the MFP 1 according to various information and programs stored in the ROM 12 and the RAM 13 and various information exchanged through the LAN interface 19. The ROM 12 is a read-only memory to store various information such as controlling programs to be executed by the CPU 11.

The RAM 13 is a rewritable volatile memory to temporally store various information during the operations in the MFP 1. The RAM 13 is provided with a plurality of memory areas, which are a device-to-be-notified list area 13a and an event-to-be-notified list area 13b.

The device-to-be-notified list area 13a stores terminal device information, indicating to which PC 31 event information should be transmitted when an event occurs. The event information includes information concerning the event occurred in the MFP 1 such as a name of the event (event name) and current status of the event. More specifically , the terminal device information is generated based on a subscribe request, which is transmitted from the PC 31 to the MFP 1. The generated terminal device information is classified into and stored in one of notifying lists in the device-to-be-notified list area 13a according to an event type indicated in the subscribe request. The event types in the present embodiment include a status event, an element event, and a job event. Fig. 5A illustrates correspondence between the types of the events, which can be notified to the PCs 31 from the MFP, 1 and requirements to be met for the MFP 1 to notify the PCs 31 of the events. In the present embodiment, as shown in Fig. 5A, a status event can be notified to the PCs 31 when an error is detected in the MFP 1 and when recovery from the error is detected. An element event can be notified to the PCs 31 when information concerning a configuration of the MFP 1 is detected. A job event can be notified to the PCs 31 when a change in operational state of a job running in the MFP 1 is detected. The terminal device information can be stored in one of a list of PCs 31 to be notified of the status event (status event device list 13a1), a list of PCs 31 to be notified of the element event (element event device list 13a2), and a list of PCs 31 to be notified of the job event (job event device list 13a3). Details of the subscribe request will be described later.

The event list area 13b includes event notifying information, which is to be utilized to provide the event information to each of the PCs 31 when a same type of event occurs for a plurality of times in the MFP 1. The event notifying information is generated in the MFP 1 each time an event occurs in the MFP 1. The event notifying information is classified into and stored in one of event lists in the event-to-be-notified list area 13b, which are a status event list 13b1, an element event list 13b2, and a job event list 13b3, according to the event type occurred in the MFP 1. The plurality of pieces of event notifying information, each of which corresponding to the event occurred in the MFP 1, are linked in chronological order and stored in one of the event lists 13b1, 13b2, 13b3. Details of the event notifying information will be described later.

The linkage of the plurality of pieces of event notifying information is provided in a known list structure. In the list structure, according to the present embodiment, each piece of the event notifying information is provided with location data to indicate a location of a following piece of event notifying information. Thus, the pieces of the event notifying information are linked serially. Therefore, in the present embodiment, when a piece of data 7 includes location data to indicate a location of another piece of data, it is referred to that the two pieces of data are "linked".

Figs. 6A-6C schematically illustrate the list structures in the status event list 13b1, the element event list 13b2, and the job event list 13b3 respectively according to the present embodiment. In each of the event lists 13b1-13b3, a data set including data pieces "event list start" and "event list end" is provided. The data piece "event list start" is a pointer to indicate a location of heading event notifying information, whilst the data piece "event list start" indicates the end of the event notifying information linked in the list structure. A pointer refers to a known data type to store location (address) information of a data piece.

When no event notifying information is stored in event lists 13b1-13b3, as shown in Figs. 6A-6C, the "event list start" is immediately followed by the "event list end." Once an event occurs in the MFP 1, event notifying information of the event is inserted immediately before the "event list end" in one of the status event list 13b1, the element event list 13b2, and the job event list 13b3, according to the event type. Further, location data (i.e., an address) of the inserted event notifying information is stored in the "event list start" pointer.

When a next event occurs, another piece of event notifying information of the event is inserted immediately before the "event list end" in one of the event lists 13b1-13b3. Thus, the newly inserted piece of event notifying information is followed by the "event list end", and an address of the newly inserted event notifying information is included in the preceding event notifying information. Thus, the two pieces of event notifying information are linked in chronological order which corresponds to the order of the event occurred in the MFP 1.

Next, the event notifying information will be described. Fig. 6D illustrates contents of the event notifying information according to the embodiment of the present invention. The event notifying information in the present embodiment includes an event name and a counter value.

The event name indicates a name of the event occurred in the MFP 1. Fig. 5B shows examples of names of events (specifically, error events) to be detected in the MFP 1 and possible causes for the events according to the embodiment of the present invention. The counter value indicates a number of terminal devices (PCs 31) to be notified of the event information in the event notifying information when an event occurs. The number of the PCs 31 can be obtained by referring to one of the status event device list 13a1, the element event device list 13a2, and the job event device list 13a3. The event device list to be referred to among the status event device list 13a1, the element event device list 13a2, and the job event device list 13a3 can be determined according to the event type of the event occurred.

As shown in Fig. 6D, the event notifying information in the present embodiment further includes terminal device information. When an event occurs and event notifying information for the event is generated, if no previous event notifying information for an event in a same event type exists, terminal device information for the PCs 31 listed in one of the event device lists 13a1, 13a2, 13a3 (determined based on the type of the event occurred) is included in the event notifying information. Meanwhile, if at least one piece of event notifying information for the same event type exists, terminal device information for the PCs 31 listed in one of the event device lists 13a1, 13a2, 13a3 (determined based on the type of the event occurred) but not included in the existing event notifying information is included in the newly created event notifying information.

Thus, terminal device information for one of the PCs 31 (e.g., the terminal A) can be included in solely one of the plurality of pieces of event notifying information in a same event type. Therefore, event information of the same event type is not redundantly and simultaneously notified to the terminal A. Further, the event notifying information is removed from the event-to-be-notified list area 13b when notification of the event information to the all of the PCs 31 specified by one of the event device lists 13a1-13a3 (determined based on the event type) completes so that the RAM 13 should not be unnecessarily occupied by the chronological notification information.

Next, referring again to Fig. 2, an electrical configuration of the PC 31 will be described. The PC 31 includes a CPU 32, a ROM 33, a RAM 34, an HDD (hard disk drive) 35, a LAN interface 36, an input unit 37, and a display unit 38, which are interconnected through a bus line 40.

The CPU 32 controls operations of each of the components in the PC 31 according to various information and programs stored in the ROM 12, the RAM 13, and the HDD 35 and various information exchanged through the LAN interface 36. The ROM 12 is a read-only memory to store various information such as controlling programs to be executed by the CPU 32. The HDD 35 is a rewritable nonvolatile data storage, and data stored therein is maintained even when electricity to the PC 31 is turned off. The HDD 35 stores various application programs, various data created in the application programs, and subscribe requests created in the application programs.

The LAN interface 36 is a known circuit which provides connection between the PC 31 and a LAN 200 to enable data exchange between the PC 31 and other external devices being connected to the LAN 200.

The input unit 37 is operated by the user to manipulate the PC 31 and includes, for example, a keyboard and a mouse. The display unit 38 displays various information to be presented to the user and includes, for example, a liquid crystal display.

Next, referring to Figs. 3A-3C, requests and event information to be exchanged between the MFP 1 and the PC 31 will be described. Figs. 3A-3C are ladder charts to illustrate data flows to be exchanged between the MFP 1 and the PC 31 according to the embodiment of the present invention.

Fig. 3A illustrates the PC 31 transmitting a subscribe request to the MFP 1 and the MFP 1 receiving the request. The subscribe request is a data piece to be transmitted preliminarily from the PC 31 to the MFP 1 to request the MFP 1 to provide event information when an event occurs in the MFP 1.

Referring to Fig. 4B, an example of the subscribe request will be described. In the present embodiment, the subscribe request is described in the XML (extensible markup language) and includes ID information, location information, information to indicate an event type, and validity information. Fig. 4B illustrates contents of the subscribe request according to the embodiment of the present invention. The ID information is for the MFP 1 and the PC 31 to recognize the request. The location information (i.e., URL) indicates a location of the PC 31 to which the event information should be provided. The event type indicates a type of the event, of which event information is required. The validity information indicates a period of time within which the event information is required.

As shown in Fig. 4B, character strings enclosed in <ID> and </ID> tags in a first line in the subscribe request (i.e., "uuid:f81d4fae-7dec-11d0-a765-00a0c91e6bf6") indicates the ID information of the subscribe request. The ID information includes randomly collected unique character strings UUID (universally unique identifier), which are created each time a subscribe request is generated in the PC 31. Thus, the MFP 1 identifies the subscribe requests transmitted from the PCs 31, unsubscribe requests, which will be described later, and the terminal device information by the ID information.

Character strings enclosed in <Address> and </Address> tags in a second line (i.e., "http://hostname:port/path") indicates the location (i.e., URL) to which the event information should be provided from the MFP 1. The URL (uniform resource locator) is a known method to describe a location of various elements including information, data, apparatuses, and services existing in a network such as the Internet. The "hostname" in the URL indicates a host name or an IP address of the PC 31 which generated the subscribe request, and the "port" indicates a port number. The port number is identifying information of an application program in the PC 31 to which the event information is provided among a plurality of application programs. Thus, the port number indicates the application program which generated the subscribe request. A character string "path" indicates a path name such as a folder name and a file name provided in the HDD 35 of the PC 31 which generated the subscribe request. The folder name and the file name can be arbitrarily created by the user.

Character strings enclosed in <EventType> and </Event Type> tags in a third line (i.e., "status event") indicates the type of the event of which event information is requested by the PC 31. The event types include, for example, "status event", "element event", and "job event", as shown in Fig. 5A. One of the three event types is specified by the application program or by the user and indicated in the subscribe request.

Character strings enclosed in <Expires> and </Expires> tags in a fourth line (i.e., "PT1H") indicates the validity information of the subscribe request. The "PT" is an abbreviation of "period of time", and in this example, "PT1H" indicates that the validity period of the subscribe request is one hour. Therefore, the MFP 1 notifies the event information of the event indicated in the subscribe request to the PC 31 for one hour starting from the time when the MFP 1 receives the subscribe request. Once the one hour expires, event information of an event occurring in the MFP 1 is no longer provided to the PC 31.

The MFP 1 receiving the subscribe request described as above from the PC 31 collects the event type and the ID information, the location information, and the validity information. The validity period is calculated based on current time being obtained from the clock circuit 18 and the validity information included in the subscribe request. For example, if the subscribe request is received on 9:00 o'clock on March 2, 2007, and the validity information indicates "PT1H", the subscribe request is effective until 10:00 o'clock on March 2, 2007.

The information thus collected from the subscribe request is stored in one of the status event device list 13a1, the element event device list 13a2, and the job event device list 13a3 in the device-to-be-notified list area 13a according to the event type indicated in the subscribe request.

For example, if the event type indicated in the subscribe request is "status event", the ID information, the location information, the validity information are generated to be the terminal device information of the PC 31 and stored in the status event device list 13a1. If the event type in the subscribe request is "element event", the generated terminal device information is stored in the element event device list 13a2. Similarly, if the event type in the subscribe request is "job event", the terminal device information is stored in the job event device list 13a3.

Fig. 4A illustrates contents of the device-to-be-notified list area 13a in the RAM 13 according to the embodiment of the present invention. It is shown in Fig. 4A that a subscribe request for a status event from the terminal A, a subscribe request for an element event from the terminal A, a subscribe request for a status event from the terminal B were issued and transmitted to the MFP 1. The MFP 1 receiving the subscribe requests generates terminal device information X, Y, and Z for the terminal devices A, B, and A respectively. The terminal device information X and Y are stored in the status event device list 13a1, and the terminal device information Z is stored in the element event device list 13a2.

It is noted that the device-to-be-notified list area 13a includes the terminal device information X and Z, both of which indicate event information should be transmitted to the terminal A when a status event and an element event occur. That is, the terminal device information X and Z are both directed to the terminal A. However, because each ID information included in a subscribe request is universally unique character strings, the terminal device information X and the terminal device information Z are not identical in the device-to-be-notified list area 13a.

Fig. 4D illustrates the contents of the terminal device information X stored in the status event device list 13a1. When the terminal device information is stored in the device-to-be-notified list area 13a, the MFP 1 notifies the PC 31 of the receipt of the subscribe request.

Next, referring to Fig. 3C and Fig. 4C, an example of an unsubscribe request will be described. The unsubscribe request is transmitted from the PC 31 to the MFP 1 in correspondence to the previously issued subscribe request when the PC 31 no longer requires event information of the event. Fig. 3C illustrates the PC 31 transmitting an unsubscribe request to the MFP 1 and the MFP 1 receiving the request.

Fig. 4C illustrates contents of the unsubscribe request according to the embodiment of the present invention. In the present embodiment, the unsubscribe request is provided solely with ID information. The ID information includes the UUID which was included in the corresponding subscribe request. When the PC 31 issues an unsubscribe request to ask the MFP 1 to no longer provide the event information, the PC 31 includes the UUID included in the subscribe request in the unsubscribe request. It is noted that the ID information is unique and does not overlap any ID information in the other subscribe requests in the MFP 1 and the PC 31, therefore, the MFP 1 can recognize terminal device information to be removed from the device-to-be-notified list area 13a.

The MFP 1 receiving the unsubscribe request from the PC 31 removes the terminal device information having the ID information which is identical to the ID information included in the received unsubscribe request from the device-to-be-notified list area 13a. Thereafter, as shown in Fig. 3C, the MFP 1 notifies the PC 31 of receipt of the unsubscribe request.

Next, referring to Fig. 3B, the event information to be transmitted to the MFP 1 to the PC 31 in response to the subscribe request will be described. Fig. 3B illustrates the MFP 1 transmitting the event information and the PC 31 receiving the event information. When an event occurs in the MFP 1, the MFP 1, which previously received the subscribe request from the PC 31, transmits event information of the event to the PC 31, of which terminal device information is stored in one of the status event device list 13a1, the element event device list 13a2, and the job event device list 13a3.

More specifically, when the event of the event type indicated in the subscribe request occurs, the MFP 1 creates event notifying information. The event notifying information is classified on the event type basis and stored in the event-to-be-notified list area 13b. Therefore, when the PC 31 is notified of the event information, the event information is transmitted to the PC 31a according to the event notifying information stored in the event-to-be-notified list area 13b.

When an event is detected in the MFP 1, the MFP 1 generates the event information, which indicate, for example, a name of the event and status of the event. The event includes an error event such as that the printing unit 21 in the MFP 1 is incapable of printing due to lack of ink (a "no-ink event") or recording sheet (a "no-sheet event"), and that the scanner unit 20 is incapable of reading an image because the document cover 8 on the top surface of the scanner unit 20 is open (a "cover-open event"). Event information can be transmitted to the PC 31 when such errors occur in the MFP 1. With this configuration, the user can be notified of the error in the MFP 1 through the PC 31 (more specifically, the display unit 38 of the PC 31). Therefore, it is not necessary that the user moves to the MFP 1 to inspect the MFP 1 when such errors occur.

Further, it is noted that the PC 31 is not provided with event information of all the events occur in the MFP 1, but event information of the events preliminarily requested by the subscribe request from the PC 31 is exclusively provided to the PC 31. For example, if a subscribe request for event information of an event, of which event type is "status event", is issued from the PC 31 to the MFP 1, and when an error (e.g., an error to be detected by any of the sensors 20a, 21a, 21b such as shortage of ink, absence of recording sheet, etc.) is detected (or recovery from the error is detected), event information to indicate the error (or the recovery) is provided to the PC 31. For another example, if a subscribe request for event information an event, of which event type is "element event" is issued from the PC 31 to the MFP 1, and when a change in configuration of the MFP 1 (e.g., an IP address, a printer name, etc.) is detected, event information to indicate the new configuration is provided to the PC 31. Further, if a subscribe request for event information of an event, of which event type is "job event", is issued from the PC 31 to the MFP 1, and when a change in status of a running job (e.g., print start, print completion, etc.) is detected, event information to indicate the change is provided to the PC 31.

With the above configuration, when a plurality of events in a same event type occur in the MFP 1, the MFP 1 can provide event information corresponding to the events respectively to the PCs 31, which preliminarily issued subscribe requests, according to the chronological order in which the events occurred. For example, when the MFP 1 detects two cover-open events serially, the MFP 1 provides event information for the former cover-open event and for the latter cover-open event to the PCs 31 in the order given.

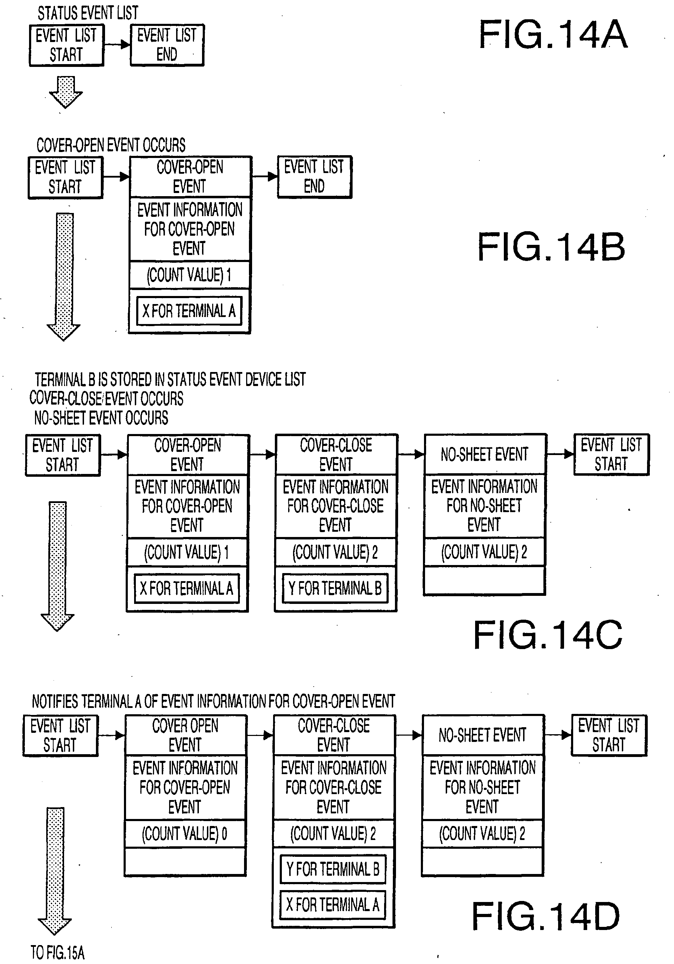

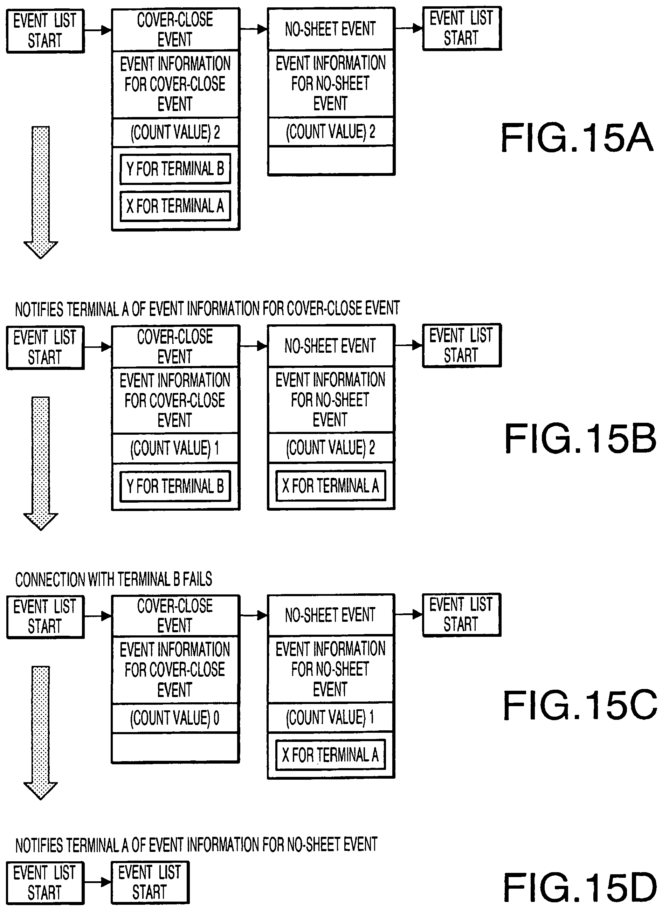

Hereinafter, referring to Figs. 14A-14D and 15A-15D, examples of the event notifying information and notification of the event information to the PCs 31 (terminals A, B) will be described. Figs. 14A-14D schematically illustrate contents in the status event list 13b1 according to the embodiment of the present invention. In Fig. 14A, the status event list 13b1, in which no event notifying information is stored. In the present example, it is assumed that the terminal A has issued a subscribe request to the MFP 1 for event information concerning an event, of which event type is status event. Accordingly, terminal device information X for the terminal A is stored in the status event device list 13a1. In the present example, further, it is assumed that the cover open/close sensor 20a detects the cover being open ("cover-open event") and subsequently the cover being closed ("cover-close event"), and the recording sheet detecting sensor 21b detects lack of the recording sheet ("no-sheet event"). Meanwhile, in the terminal B, the cover open/close sensor 20a detects the cover being open, and the terminal B issues a subscribe request to the MFP 1 for event information concerning a status event. Thereafter, the cover open/close sensor 20a detects the cover being closed.

In the above circumstances, first, when a cover-open event occurs, the MFP 1 generates event notifying information so that event information corresponding to the cover-open event is provided to the terminal A. The event notifying information to be generated includes an event name "cover-open event", event information "event information corresponding to the cover-open event", a counter value "1", which indicates the number of terminal devices to be notified of the event information, and terminal device information "X for terminal A", indicating to which terminal device the event information should be provided. The terminal device information is obtained from the status event device list 13a1 based on the event type of the event occurred (i.e., the cover-open event).

The event notifying information generated as above is inserted immediately before the "event list end" in the status event list 13b1 as shown in Fig. 14B. Thus, the pointer "event list start" is followed by the event notifying information, which is linked with the "event list end". As the event notifying information is stored in the status event device list 13a1, the MFP 1 provides the event information included in the event notifying information to the terminal A, which is indicated in the terminal device information "X for terminal A".

Meanwhile, the terminal B issues a subscribe request to the MFP 1 for event information concerning a status event. Accordingly, the MFP 1 stores the terminal device information "Y for terminal B" in the status event device list 13a1 and notifies the terminal B of the receipt of the subscribed request. Thus, the terminal device information "X for terminal A" and "Y for terminal B" are stored in the status event device list 13a1. It is noted that the terminal B will be notified of event information of subsequent events which occur after the MFP 1 receives the subscribe request. Therefore, first event information to be notified to the terminal B will be the event information concerning the cover-close event.

When a cover-close event occurs in the MFP 1, the MFP 1 generates event notifying information to provide the terminal A and the terminal B respectively with "event information corresponding to the cover-close event". As shown in Fig. 14C (in the middle column), the event notifying information generated at this point includes an event name "cover-close event", event information "event information corresponding to the cover-close event", and a counter value 2, which indicates the number of terminal devices to be notified of the event information, and terminal device information "Y for terminal B", indicating to which terminal device the event information should be provided. The terminal device information is obtained from the status event device list 13a1 based on the event type of the event occurred (i.e., the cover-close event).

The counter value indicates the number of pieces of terminal device information in the status event device list 13a1 at the time when the event occurs (i.e., 2). It is noted that the current event notifying information (shown in the middle column in Fig. 14C) solely includes the terminal device information "Y for terminal B", because the terminal device information "X for terminal A" is included in the previously generated event notifying information, which is shown in the second left column in Fig. 14C.

The currently generated event notifying information is inserted immediately before the "event list end" in the status event list 13b1. Thus, the status event list 13b1 includes "event list start", the event notifying information for the cover-open event, the event notifying information for the cover-close event, and "event list end", which are linked in the above order. The event information included in the currently generated and newly inserted event notifying information to the terminal B as indicated in the terminal device information "Y for terminal B" in the event notifying information. However, at this point, connection between the MFP 1 and the terminal B is not established, therefore, the notification fails.

When a "no-sheet" event occurs, event notifying information corresponding to the event is generated and inserted immediately before "event list end". In this event notifying information, a counter value "2" to indicate the number of pieces of the terminal device information "X for terminal A" and "Y for terminal B" is included, as shown in the second right column in Fig. 14C. It is noted the terminal device information "X for terminal A" and "Y for terminal B" is not included in the event notifying information for the no-sheet event at this point, because the terminal device information "X for terminal A" is included in the event notifying information for the cover-open event, and the terminal device information "Y for terminal B" is included in the event notifying information for the cover-close event.

When the event information corresponding to the precedent cover-open event is provided to the terminal A, the terminal device information "X for terminal A" in the event notifying information for the cover-open event is passed to the following event notifying information, as shown in the second right column and the middle column in Fig. 4D, and the counter value in the event notifying information is decremented by one. Further, the event information corresponding to the cover-close event is notified to the terminal A. Meanwhile, the event notifying information for the cover-open event, in which the counter value is now "zero", is deleted from the status event list 13b (see Fig. 15A).

When the event information corresponding to the cover-close event, which occurred later than the cover-open event, is notified to the terminal A, the terminal device information "X for terminal A" in the event notifying information, of which notification of the event information has completed normally without failure, is passed to the event notifying information for the no-sheet event. The counter value in the event notifying information for the cover-close event is decremented by one.

Meanwhile, attempts to establish connection between the MFP 1 and the terminal B fail for predetermined times (e.g., twice), the terminal device information "Y for terminal B" is removed from the status event device list 13a1, and the counter value in the event notifying information for the cover-close event is decremented by one (see the second left column in Fig. 15C). Further, the counter value in the event notifying information for the no-sheet event is decremented by one (see the second fight column in Fig. 15C). Further, the event notifying information for the cover-close event is removed from the status event list 13b1.

When the event information for the no-sheet event is provided to the terminal A, the terminal device information "X for terminal A" is removed from the event notifying information for the no-sheet event, and the counter value is decremented to zero. It is noted that the terminal device information "X for terminal A" is removed, because the event notifying information for the no-sheet event is not followed by another piece of event notifying information but followed by "event list end". Further, the event notifying information for the no-sheet event is removed from the status event list 13b1 (see Fig. 15D).

Hereinafter, the above-described transition of various information will be described with reference to Figs. 7-13, which illustrate processes to be executed by the CPU 11 of the MFP 1 to notify the PCs 31 of the event information.

Fig. 7 is a flowchart to illustrate a main process of the MFP 1 according to the embodiment of the present invention. The main process is repeatedly executed by the CPU 11 of the MFP 1 once the MFP 1 is powered on and until the MFP 1 is powered off.

When the MFP 1 is powered on, and the process starts, in S1, data previously stored in the device-to-be-notified list area 13a and the event-to-be-notified list area 13b is initialized. Next, in S2, it is judged as to whether an event occurred in the MFP 1. If an event is detected (S2: YES), in S3, an event notifying information generating process is executed. If no event is detected (S2: NO), the process proceeds to S4.

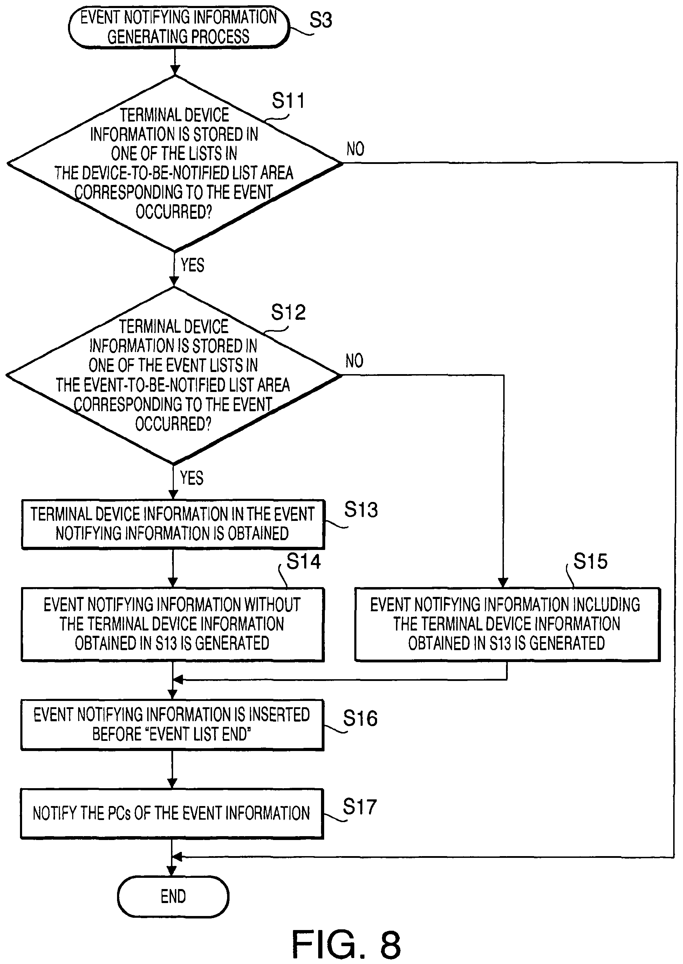

Hereinafter, referring to Fig. 8, the event notifying information generating process will be described. Fig. 8 is a flowchart to illustrate the event notifying information generating process according to the embodiment of the present invention. In the chronological information generating process, the MFP 1 generates event notifying information which includes event information of the event occurred in the MFP 1 and stores the generated event notifying information in one of the status event device list 13a1, the element event device list 13a2, and the job event device list 13a3 (depending on the event type of the event occurred).

When the process starts, in S11, it is judged as to whether terminal device information is stored in the one of the status event device list 13a1, the element event device list 13a2, and the job event device list 13a3 (determined by the event type of the event occurred). If no terminal device information is stored (S11: NO), the process is terminated. If terminal device information is stored (S11: YES), in S12, it is judged as to whether event notifying information is stored in one of the status event list 13b1, the element event list 13b2, and the job event list 13b3 (determined by the event type of the event occurred). If event notifying information is stored (S12: YES), in S13, terminal device information included in each piece of the event notifying information is obtained.

In S 14, event notifying information is generated. More specifically, event notifying information, which includes an event name of the event occurred, event information corresponding to the event, and a counter value indicating a number of terminal devices (PCs 31) to be notified of the event information in the event notifying information, is generated. Further, terminal device information stored in the one of the event device lists 13a1, 13a2, 13a3 (determined based on the type of the event occurred) is included. However, in this regard, the terminal device information for the PC 31 obtained in S 13 is eliminated.

In S12, if no event notifying information is stored in the status event list 13b1, the element event list 13b2, or the job event list 13b3 (S12: NO), in S15, event notifying information including an event name, event information corresponding to the event, a counter value indicating a number of terminal devices is generated. Further, in this step, all terminal device information stored in the one of the event device lists 13a1, 13a2, 13a3 (determined based on the type of the event occurred), including the terminal device information obtained in S13, is included.

In S16, the event notifying information generated in S14 or in S15 is inserted immediately before the "event list end" in the one of the status event list 13b1, the element event list 13b2, and the job event list 13b3 (determined by the event type). Next, in S17, the event information included in the event notifying information is provided to the terminal devices (PCs 31) being indicated by the terminal device information, which is indicated in the event notifying information. The process is terminated thereafter.

Thus, in the event notifying information generating process, the event notifying information for the event occurred is generated. Further, the event notifying information can be stored in one of the status event list 13b1, the element event list 13b2, or the job event list 13b3 in chronological order.

Following S3, the main process proceeds to S4 (see Fig. 7). In S4, it is judged as to whether the PC 31 issues a request for connection. If connection is requested (S4: YES), in S5, data receiving process is executed. If no connection is requested (S5: NO), the process proceeds to S6.

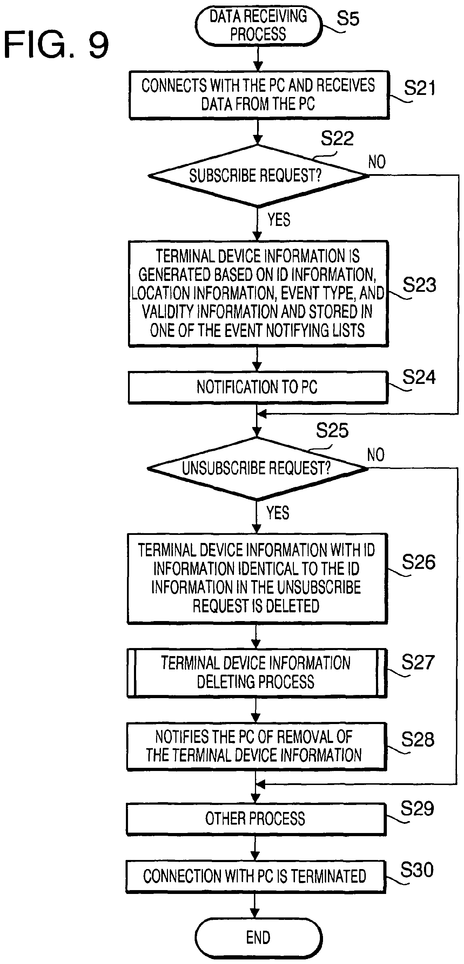

Fig. 9 illustrates a flowchart of the data receiving process to be executed by the CPU 11 of the MFP 1 according to the embodiment of the present invention. In this process, the MFP 1 receives various data including a subscribe request, an unsubscribe request from the PC 31 and performs various processes according to the received data.

When the process starts, in S21, the CPU 11 connects the MFP 1 with the PC 31 and receives data transmitted from the PC 31. In S22, it is judged as to whether the received data is a subscribe request. If the received data is a subscribe request (S22: YES), in S23, ID information, location information, information to indicate an event type, and validity information are extracted from the subscribe request to generate terminal device information. The terminal device information is stored in one of the event device lists 13a1, 13a2, 13a3 (determined based on the event type). In S24, the CPU 11 notifies the PC 31 that the terminal device information is stored in the one of the event device lists 13a1, 13a2, 13a3. It is noted that the steps S22-S24 can be indicated as shown in Fig. 3A. In S22, when the received data is not a subscribe request (S22: NO), the process proceeds to S25.

In S25, it is judged as to whether the data received in S21 is an unsubscribe request. If the received data is an unsubscribed request (S25: YES), in S26, the terminal device information having ID information identical to the ID information included in the unsubscribe request is searched through the device-to-be-notified list area 13a. When it is found, the terminal device information is deleted. Next, in S27, a terminal device information deleting process is executed.

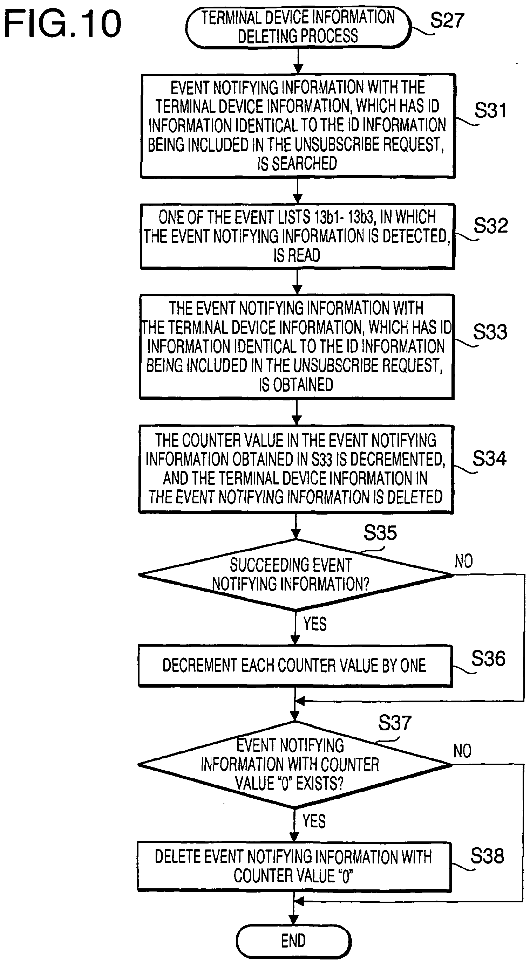

Hereinafter, referring to Fig. 10, the terminal device information deleting process will be described. Fig. 10 is a flowchart to illustrate the terminal device information deleting process according to the embodiment of the present invention. In this process, the terminal device information being stored in the event-to-be-notified list area 13b is also deleted.

When the process starts, in S31, event notifying information with the terminal device information, which has ID information identical to the ID information being included in the unsubscribe request, is searched through the event-to-be-notified list area 13b. In S32, one of the status event list 13b1, the element event list 13b2, and the job event list 13b3 in the event-to-be-notified list area 13b, in which the event notifying information is detected, is read. Further, in S33, the event notifying information with the terminal device information, which has ID information identical to the ID information being included in the unsubscribe request, is obtained from the one of the status event list 13b1, the element event list 13b2, and the job event list 13b3 read in S32.

In S34, the counter value included in the event notifying information obtained in S33 is decremented by one, and the terminal device information in the event notifying information obtained in S33 is deleted. Next in S35, it is judged as to whether the event notifying information obtained in S33 is linked with at least one piece of event notifying information. If at least one piece of event notifying information is linked (S35: YES), in S36, each counter value included in all of the succeeding pieces of event notifying information before the "event list end" is decremented by one. In S35, if no event notifying information is linked with the event notifying information obtained in S33 (S35: NO), the process proceeds to S37.

In S37, it is judged as to whether event notifying information having a counter value "zero" is included in the one of the status event list 13b1, the element event list 13b2, and the job event list 13b3, which is read in S32. If such event notifying information is found (S37: YES), in S38, all pieces of the event notifying information with the counter value "zero" are deleted. If no event notifying information with the counter value "zero" is found (S37: NO), the process is terminated.

In the above process, information identical to the terminal device information being deleted from the device-to-be-notified list area 13a can be deleted from the event-to-be-notified list area 13b when the unsubscribe request is received in the MFP 1. In addition, the counter values in the event notifying information following the event notifying information, of which terminal device information is deleted, are decremented by one so that the event notifying information having the counter values "zero" as decremented is deleted from the event-to-be-notified list area 13b.

As the terminal device information deleting process is terminated, the process returns to S28 in the data receiving process (Fig. 9). In S28, the CPU 11 notifies the PC 31 of the removal of the terminal device information from the device-to-be-notified list area 13a. It is noted that the steps S25-S28 can be indicated as shown in Fig. 3C. In S25, if the received data is not an unsubscribe request (S25: NO), the process proceeds to S29. In S29, the CPU 11 performs other step corresponding to the received data. The other process may be, for example, when the received data is image data to be printed, a printing process to form an image on a recording sheet based on the received image data. In S30, the connection with the PC 31 is terminated. Thereafter, the data receiving process is terminated.

In the data receiving process as described above, the MFP 1 can receive the subscribe request and the unsubscribe request from the PC 31. When the MFP 1 receives the subscribe request, necessary information can be extracted therefrom to generate the terminal device information and stored in the device-to-be-notified list area 13a. When the MFP 1 receives the unsubscribe request, the terminal device information which has the ID information identical to the ID information being included in the unsubscribe request can be deleted from the device-to-be-notified list area 13a and the event-to-be-notified list area 13b. Further, as the terminal device information is deleted from the event-to-be-notified list area 13b, the counter values included in the event notifying information to follow the chronological information, from which the terminal device information is deleted, are respectively decremented by one so that the event notifying information having the updated counter values "zero" can be deleted from the event-to-be-notified list area 13b.

As the data receiving process is terminated, the process returns to S6 (Fig. 7) in the main process. In S6, it is judged as to whether the event notifying information is included in the event-to-be-notified list area 13b. If the event notifying information is included (S6: YES), the CPU 11 executes an event list updating process in S7 and a failure terminal device information deleting process in S8. In S6, if no event notifying information is included (S6: NO), the process proceeds to S9.

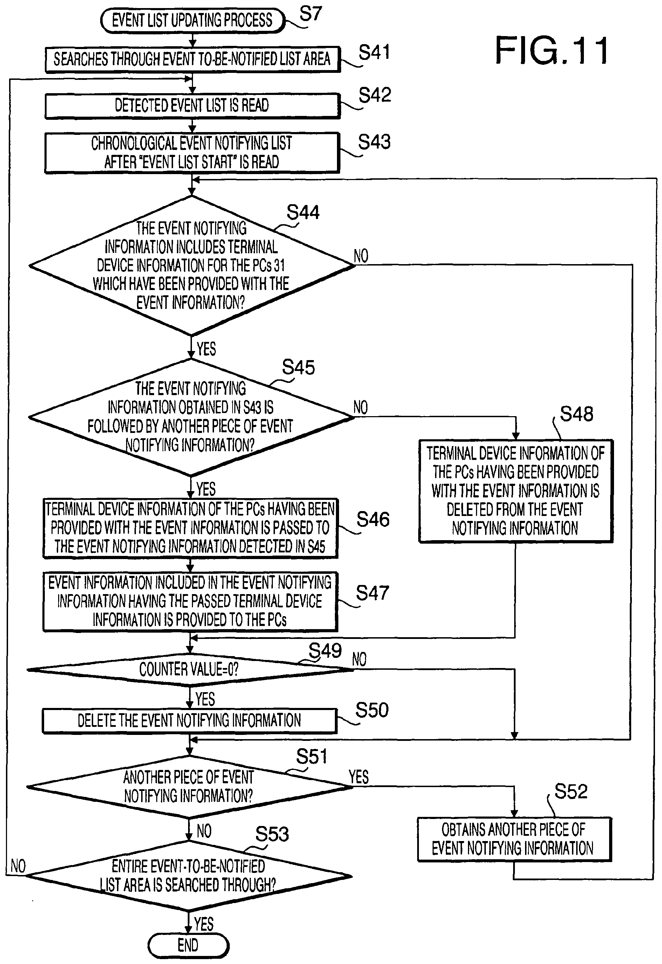

Hereinafter, referring to Fig. 11, the event list updating process will be described. Fig. 11 is a flowchart to illustrate the event list updating process according to the embodiment of the present invention. In this process, the terminal device information of the PC 31, which has been provided with the event information for the event occurred in the MFP 1, is shifted to a following piece of event notifying information. Further, when the PCs 31, of which terminal device information is included in the event notifying information, are notified of the event information, the event notifying information is deleted from the event-to-be-notified list area 13b.

When the process starts, in S41, the CPU 11 searches through the event-to-be-notified list area 13b to find one of the status event list 13b1, the element event list 13b2, and the job event list 13b3, which includes the event notifying information. In S42, a detected one of the status event list 13b1, the element event list 13b2, and the job event list 13b3 having the event notifying information is read by the CPU 11. In S43, event notifying information to follow immediately after the "event list start" in the one of the status event list 13b1, the element event list 13b2, and the job event list 13b3 being detected is read by the CPU 11.

In S44, it is judged as to whether the event notifying information includes terminal device information for the PCs 31 which have been provided with the event information. In the present embodiment, the PCs 31 receiving the event notifying information transmit acknowledgement to the MFP 1 in response. Therefore, the judgment is made based on the acknowledgment from the PCs 31 being returned within a predetermined period of time. If the event notifying information dose not include such terminal device information (S44: NO), the process proceeds to S51. If the event notifying information includes such terminal device information (S44: YES), in S45, it is judged as to whether the event notifying information obtained in S43 is followed by (linked with) another piece of event notifying information.

In S45, if another piece of event notifying information is linked (S45: YES), in S46, the counter value in the chronological notifying information obtained in S43 is updated. More specifically, the number of the PCs 31 which have been provided with the event information is subtracted from the counter value included in the chronological notifying information obtained in S43. Further, the terminal device information of the PCs 31, which have been provided with the event information, is passed to the event notifying information detected in S45. Next, in S47, the event information included in the event notifying information having the passed terminal device information is provided to the PCs 31, which are indicated in the passed terminal device information.

In S45, if the event notifying information is not followed by another piece of event notifying information (S45: NO), in S48, the counter value in the chronological notifying information obtained in S43 is updated. More specifically, the number of the PCs 31, which have been provided with the event information, is subtracted from the counter value in the event notifying information obtained in S43. Further, the terminal device information of the PCs 31, which have been provided with the event information, is deleted from the event notifying information.

In S49, it is judged as to whether the counter value in the event notifying information obtained in S43 is zero. If the counter value is zero (S49: YES), in S50, the event notifying information is deleted from the event-to-be notified list area 13b (i.e., one of the one of the status event list 13b1, the element event list 13b2, and the job event list 13b3). It is noted that the counter value zero in the event notifying information indicates completion of the notification of the event information. Therefore, when such event notifying information is removed, the RAM 13 is not unnecessarily occupied by the chronological notification information, which is no longer useful. In S43, if the counter value is not zero (S49: NO), the process proceeds to S51.

In S51, it is judged as to whether the event notifying information obtained in S43 is followed by (linked with) another piece of event notifying information. If another piece of event notifying information follows (S51: YES), in S52, the another piece of event notifying information is obtained, and the process returns to S44 to repeat the steps S44 through S52.

In S51, if the event notifying information obtained in S43 is not followed by another piece of event notifying information (S51: NO), in S53, it is judged as to whether the entire event-to-be-notified list area 13b is searched through to find one of the status event list 13b1, the element event list 13b2, and the job event list 13b3, which includes event notifying information. In S53, if the entire event-to-be-notified list area 13b is searched through (S53: YES) to find no remaining event lists 13b1-13b3 having event notifying information, the event list updating process is terminated. In S53, if the entire event-to-be-notified list area 13b is not searched through (S53: NO), the process returns to S42 to repeat the steps S42 through S53.

With the event list updating process as described above and shown in Fig. 11, when the event notifying information is included in the event list area 13b, the terminal device information of the PCs 31 which were notified of the event information can be passed to the following piece of the event notifying information so that the event information included in the following piece of the chronological notifying information can be provided to the PCs 31, of which terminal device information is passed. Therefore, when a same type of event occurs for a plurality of times in the MFP 1, the event information for each event can be provided to the respective PCs 31 in chronological order, in which the events occur. Further, when notification of the event information completes, the event notifying information can be effectively removed from the event list area 13b.

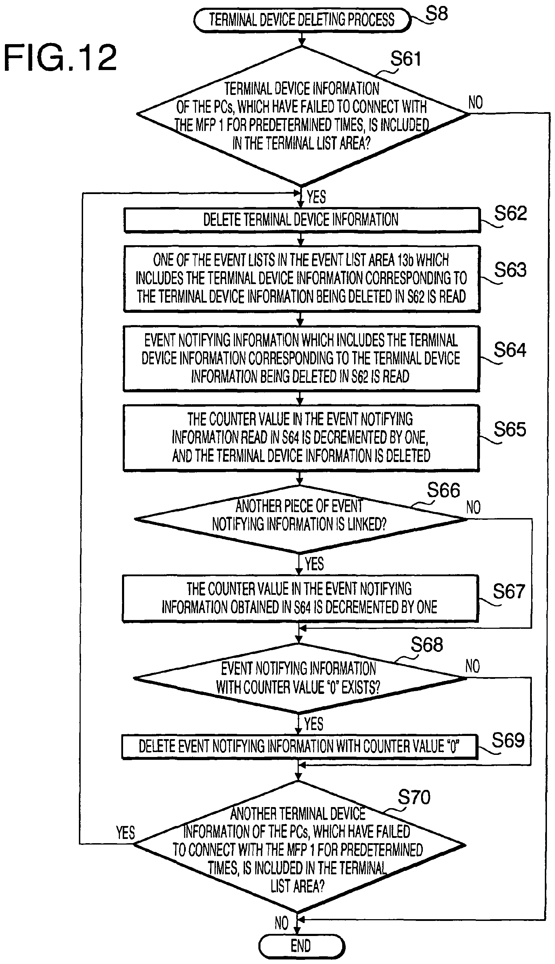

When the event list updating process is terminated, the process returns to S8 in the main process (Fig. 7). In S8, the failure terminal device information deleting process is executed. Hereinafter, referring to Fig. 12, the failure terminal device information deleting process will be described. Fig. 12 is a flowchart to illustrate the failure terminal device information deleting process according to the embodiment of the present invention. In this process, notification of the event information to the PC 31 fails for predetermined times (e.g., twice) due to disconnection between the MFP 1 and the PC 31, the terminal device information of the PC 31 is deleted from the device-to-be-notified list area 13a and from the event list area 13b. The times of attempts for connection can be preliminarily determined based on various factors such as a network environment and communication speed of the network.

As the failure terminal device information deleting process starts, in S61, it is judged as to whether terminal device information of the PCs 31, which have failed to connect with the MFP 1 for predetermined times, is included in the device-to-be-notified list area 13a. If no terminal device information is included (S61: NO), the process is terminated. If the terminal device information is included (S61: YES), in S62, the terminal device information is deleted from the device-to-be-notified list area 13a. Further, in S63, one of the status event list 13b1, the element event list 13b2, and the job event list 13b3 in the event list area 13b, which includes the terminal device information corresponding to the terminal device information being deleted in S62 is read by the CPU 11.

In S64, event notifying information which includes the terminal device information corresponding to the terminal device information being deleted in S62 is read. In S65, the counter value in the event notifying information read in S64 is decremented by one, and the terminal device information in the chronological notifying information read in S64 is deleted.

In S66, it is judged as to whether the event notifying information is followed by another piece of event notifying information. If another piece of event notifying information is linked (S66: YES), in S67, each counter value included in all of the pieces of event notifying information following the event notifying information obtained in S64 before the "event list end" is decremented by one. In S66, if no event notifying information follows (S66: NO), the process proceeds to S68.

In S68, it is judged as to whether event notifying information having a counter value "zero" is included in the one of the status event list 13b1, the element event list 13b2, and the job event list 13b3, which is read in S63. If such event notifying information is found (S68: YES), in S69, all pieces of the event notifying information with the counter value "zero" are deleted. It is noted that the counter value zero in the event notifying information indicates completion of the notification of the event information. Therefore, when such event notifying information is removed, the RAM 13 is not unnecessarily occupied by the chronological notification information, which is no longer useful. In S68, if no event notifying information with the counter value "zero" is found (S68: NO), the process proceeds to S70.

In S70, it is judged as to whether another terminal device information of the PCs 31, which have failed to connect with the MFP 1 for predetermined times, is included in the device-to-be-notified list area 13a. If the terminal device information is included (S70: YES), the process returns to S62 to repeat the steps S62 through S70. If no other terminal device information is included (S70: NO), the process is terminated.

In the failure terminal device information deleting process as described above and shown in Fig. 12, when attempts to connect the PC 31 with the MFP 1 fail for predetermined times, the terminal device information of the PC 31 can be deleted from the device-to-be-notified list area 13a and from the event list area 13b. Further, since the terminal device information of the PC 31 which has failed to connect with the MFP 1 is removed from the device-to-be-notified list area 13a, event information of an event which occurs after the removal is prevented from attempting in vain to be notified to the PC 31.

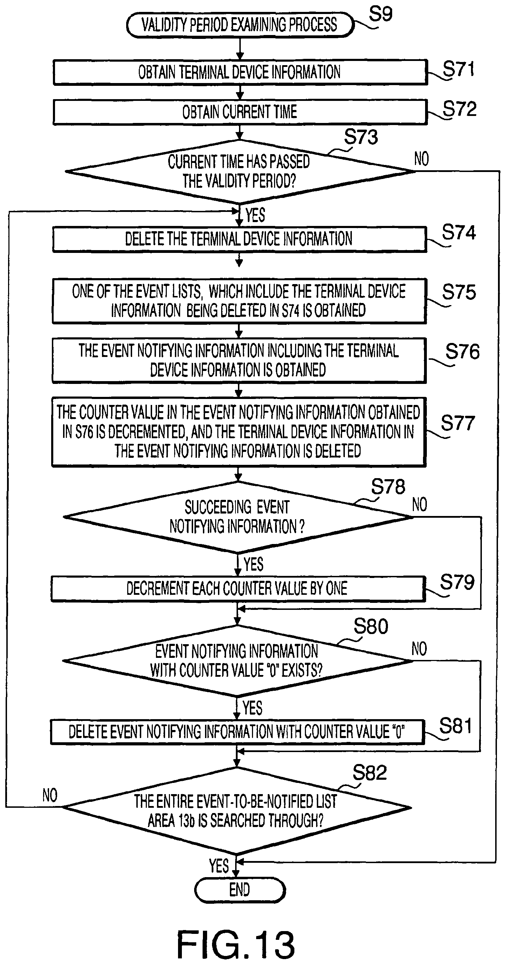

When the failure terminal device information deleting process is terminated, the process returns to S9 in the main process (Fig. 7). In S9, a validity period examining process is executed. Hereinafter, referring to Fig. 13, the validity period examining process according to the embodiment of the present invention will be described. Fig. 13 is a flowchart to illustrate the validity period examining process according to the embodiment of the present invention. In the validity period examining process, validity periods included in the terminal device information, which is stored in the device-to-be-notified list area 13a, are examined. Further, the terminal device information having expired validity periods is deleted from the device-to-be-notified list area 13a and from the event list area 13b.

As the validity period examining process starts, in S71, a piece of terminal device information in the device-to-be-notified list area 13a is obtained, and in S72, current time is obtained from the clock circuit 18. In S73, it is judged as to whether the current time has passed the validity period. If the current time has passed the validity period (S73: YES), in S74, the terminal device information obtained in S71 is deleted from the device-to-be-notified list area 13a. In S73, if the current time is within the validity period and not passed the validity period (S73: NO), the process proceeds to S82.

Following S74, in S75, one of the status event list 13b1, the element event list 13b2, and the job event list 13b3, which included the terminal device information being deleted in S74 is obtained. In S76, the event notifying information included the terminal device information is obtained. In S77, the counter value in the event notifying information obtained in S76 is decremented by one, and the terminal device information in the event notifying information is deleted.

In S78, it is judged as to whether the event notifying information obtained in S76 is followed by (linked with) at least one piece of event notifying information. If at least one piece of event notifying information is linked (S78: YES), in S79, each counter value included in all of the succeeding pieces of event notifying information before the "event list end" is decremented by one. In S35, if no event notifying information is linked with the event notifying information obtained in S76 (S78: NO), the process proceeds to S80.

In S80, it is judged as to whether event notifying information having a counter value "zero" is included in the one of the status event list 13b1, the element event list 13b2, and the job event list 13b3, which is read in S76. If such event notifying information is found (S80: YES), in S81, all pieces of the event notifying information with the counter value "zero" are deleted. If no event notifying information with the counter value "zero" is found (S81: NO), the process is terminated. It is noted that the counter value zero in the event notifying information indicates completion of the notification of the event information. Therefore, when such event notifying information is removed, the RAM 13 is not unnecessarily occupied by the chronological notification information, which is no longer useful.

In S82, it is judged as to whether the entire event-to-be-notified list area 13b is searched through to find one of the status event list 13b1, the element event list 13b2, and the job event list 13b3, which includes event notifying information. In S82, if the entire event-to-be-notified list area 13b is searched through (S82: YES) to find no remaining event lists 13b1-13b3 having event notifying information, the event list updating process is terminated. In S82, if the entire event-to-be-notified list area 13b is not searched through (S53: NO), the process returns to S42 to repeat the steps S71 through S82.

In the validity period examining process as described above and shown in Fig. 13, validity of the terminal device information stored in the device-to-be-notified list area 13a can be checked so that invalid terminal device information can be removed from the device-to-be-notified list area 13a and from the event list area 13b. Therefore, the event information can be provided to the PCs 31 which are validly subscribed.

When the validity period examining process is terminated, the process returns to S9 in the main process (Fig. 7) and repeats the steps S2 through S9.

Although an example of carrying out the invention has been described, those skilled in the art will appreciate that there are numerous variations and permutations of the information processing apparatus that fall within the scope of the invention as set forth in the appended claims. It is to be understood that the subject matter defined in the appended claims is not necessarily limited to the specific features or act described above. Rather, the specific features and acts described above are disclosed as example forms of implementing the claims.

For example, in the above embodiment, the terminal device information, including the ID information, the location information (i.e., URL), the validity period, is generated based on the subscribe request, which is issued by the PC 31 to the MFP 1 to be stored in the device-to-be-notified list area 13a. However, if the location information in the subscribe request is a hostname, and if the MFP 1 and the PC 31 communicate with each other in TCP/IP, the hostname of the PC 31 can be converted into an IP address so that the MFP 1 can generate the terminal device information based on the IP address. A hostname can be converted into an IP address when the MFP 1 makes an inquiry to a specific computer which is called a DNS server. However, if the hostname is preliminarily converted into the IP address and stored in a predetermined storage area, the notification of the event information can be conducted more efficiently.

For another example, the number of pieces of terminal device information to be included in the device-to-be-notified list area 13a can be arbitrarily limited according to various factors such as processing capacity of the CPU 11 of the MFP 1 and data communication rate in the LAN 200. It is noted that, some terminal devices may not be notified of event information for some events due to the limitation, however, delay in notification of the event information to the other terminal devices that are allowed to be notified can be controlled. Specifically, as the number of the terminal devices to be notified is limited, the terminal device information of the PCs 31 which are not connected with the MFP 1 is removed so that the other PCs 31 which are communicable with the MFP 1 can be effectively notified of the event information.

Further, the events occurring in the MFP 1 are not necessarily classified into the event types, but the event information may be provided to the PCs 31 regardless of the event type. Furthermore, the event notifying information may be provided with terminal device information of all the terminal devices to which the event information is notified, and a pointer can be shifted each time notification is completed.

## Claims

1. An information processing apparatus (1) comprising:
an event detecting unit (20a, 21a, 21b) configured to detect events occurring in the information processing apparatus (1);
an event notifying information generating unit (11, 13) configured to generate a piece of event notifying information (Fig 6D), which includes event information concerning a respective event and information concerning at least one client device (31) to which the event information is to be provided;
an event notifying information storage (13b) configured to store the event notifying information linked in chronological order in a list structure, so that the pieces of the event notifying information are linked serially and the event information is provided to the at least one client device (31) in the chronological order in which the events occur;
a client information list storage (13a) configured to store therein information concerning the at least one client device (31) to which the event information is to be provided;
a notifying unit (11, 13) configured to provide a piece of the event information corresponding to a first event among the plurality of events to the at least one client device (31), of which information is stored in the client information list storage (13a); and
a judging unit (11, 19) configured to judge as to whether the piece of the event information was provided to the at least one client device (31) normally without failure,
wherein the notifying unit (11, 13) is configured to provide another piece of the event information corresponding to a second event among the plurality of events, which occurs subsequently to the first event according to the event notifying information, when the judging unit (11, 19) judges that the precedent piece of the event information was provided to the at least one client device (31) normally without failure;
wherein the event notifying information is stored in the event notifying information storage (13b) furthermore on the basis of an event type of the event occurring in the information processing apparatus (1);
wherein the event notifying information includes a counter (Fig 6D) configured to indicate number of the at least one client device (31) being stored in the client information list storage (13a) on the event type basis;
wherein the information processing apparatus (1) is provided with a first subtracting unit configured to subtract the number of the client device (31), which was provided with the event information normally without failure from the number indicated in the counter, when the piece of the event information was provided to one of the at least one client device normally without failure; and
wherein the information processing apparatus (1) further comprises:
a client device information deleting unit (11) configured to delete the client device information of the at least one client device (31), to which the piece of the event information was judged to be incapable of being provided, from the client information list storage (13a) and the event notifying information having the piece of the event information;
a second subtracting unit (11) configured, when the client device information deleting unit (11) deletes the client information of the at least one client device (31), to subtract one from the number indicated in the counter in the event notifying information having the piece of the event information; and
a third subtracting unit (11) configured, when the client device information deleting unit (11) deletes the client information of the at least one client device (31), to subtract one from the number indicated in the counter in the event notifying information which is arranged, in the predetermined order in the event notifying information storage (13b), to follow the event notifying information, of which event information is judged to be incapable of being provided.

2. The information processing apparatus according to claim 1, comprising:
a receiving unit (11, 19) configured to receive a notification request (Fig 4B), issued by the at least one client device (31) to request the information processing apparatus (1) to provide the event information to the at least one client device (31); and
a requesting client device list storage (13a) configured to include client device information concerning the at least one client device (31) which issued the notification request,
wherein the event notifying information generating unit (11, 13) includes the client device information being included in the requesting client device list storage (13a) to generate the event notifying information concerning the event occurring in the information processing apparatus (1) so that the event information of the event is provided to the at least one client device (31) according to the client device information included in the event notifying information, when the event detecting unit (20a, 21a, 21b) detects the event.

3. The information processing apparatus according to claim 2, comprising:
a cancellation receiving unit (11, 19) configured to receive a cancellation request (Fig 4C), issued by the at least one client device (31) to cancel the notification request so that the information processing apparatus (1) ceases providing the event information to the at least one client device (31); and
a client information removing unit (11) configured to remove the client device information of the at least one client device (31) which issued the cancellation request from the requesting client device list storage (13a) and the event notifying information so that the event information of the event is prevented from being provided to the at least one client device (31) which issued the cancellation request.

4. The information processing apparatus according to claim 1, 2 or 3, comprising
an event information deleting system (11) configured to delete the event notifying information, in which the number of the client device (31) indicated in the counter is zero, from the event notifying information storage (13b).

5. A method to control an information processing apparatus (1) capable of monitoring a plurality of events which occur in the information processing apparatus (1) and providing event information concerning each of the events to at least one client device (31) which is communicable with the information processing apparatus (1), comprising:
detecting (20a, 21a, 21b) an event occurring in the information processing apparatus (1);
generating a piece of event notifying information (Fig 6D), which includes the event information and information concerning the at least one client device (31) to which the event information is to be provided;
storing the event notifying information linked in chronological order in a list structure, so that the pieces of the event notifying information are linked serially and the event information concerning each of the events is provided to the at least one client device (31) in the chronological order in which the events occur;
storing information concerning the at least one client device (31) to which the event information is to be provided in a client information list storage (13 a);
providing a piece of the event information corresponding to a first event among the plurality of events to the at least one client device (31), of which information is stored in the client information list storage (13 a);
judging as to whether the piece of the event information was provided to the at least one client device (31) normally without failure;
providing another piece of the event information corresponding to a second event among the plurality of events, which occurs subsequently to the first event, according to the event notifying information when the judging unit judges that the precedent piece of the event information was provided to the at least one client device (31) normally without failure; and
storing the event notifying information in the event notifying information storage (13b) furthermore on the basis of an event type of the event occurring in the information processing apparatus (1);
wherein the event notifying information includes a counter to indicate number of the at least one client device (31) being stored in the client information list storage (13a) on the event type basis; and
wherein the method includes subtracting the number of the client device (31) which was provided with the event information normally without failure from the number indicated in the counter when the piece of the event information was provided to one of the at least one client device (31) normally without failure;
the method further comprising:
deleting the client device information of the at least one client device (31), to which the piece of the event information was judged to be incapable of being provided, from the client information list storage and the event notifying information having the piece of the event information; and
when deleting the client device information of the at least one client device (31):
subtracting one from the number indicated in the counter in the event notifying information having the piece of the event information; and
subtracting one from the number indicated in the counter in the event notifying information which is arranged, in the predetermined order in the event notifying information storage, to follow the event notifying information, of which event information is judged to be incapable of being provided.

6. The method according to claim 5, comprising:
receiving a notification request, issued by the at least one client device (31) to request the information processing apparatus (1) to provide the event information to the at least one client device (31); and
storing client device information concerning the at least one client device (31) which issued the notification request in a requesting client device list storage (13a); and
including the client device information being stored in the requesting client device list storage (13a) to generate the event notifying information concerning the event occurring in the information processing apparatus (1) so that the event information of the event is provided to the at least one client device (31) according to the client device information included in the event notifying information, when the event is detected.

7. The method according to claim 6, comprising:
receiving a cancellation request, issued by the at least one client device (31) to cancel the notification request so that the information processing apparatus (1) ceases providing the event information to the at least one client device (31); and
removing the client device information of the at least one client device (31) which issued the cancellation request from the requesting client device list storage (13a) and the event notifying information so that the event information of the event is prevented from being provided to the at least one client device (31) which issued the cancellation request.

8. The method according to claim 5, 6 or 7, comprising
deleting the event notifying information, in which the number of the client device (31) indicated in the counter is zero, from the event notifying information storage (13b).

9. A computer usable medium comprising computer readable instructions for controlling an information processing apparatus (1) to monitor a plurality of events which occur in the information processing apparatus (1) and provide event information concerning each of the events to at least one client device (31) which is communicable with the information processing apparatus (1) by executing steps of any one of claims 5 to 8.

## Patentansprüche

1. Informationsverarbeitungsgerät (1) mit:
einer Ereigniserfassungseinheit (201a, 210a, 210b), die dazu konfiguriert ist, Ereignisse zu erfassen, die in dem Informationsverarbeitungsgerät (1) auftreten;
einer Ereignismitteilungsinformationserzeugungseinheit (11, 13), die dazu konfiguriert ist, ein Ereignismitteilungsinformationsstück zu erzeugen (Fig. 6D), das Ereignisinformationen bezüglich eines jeweiligen Ereignisses und Informationen bezüglich zumindest einer Client-Vorrichtung (31) enthält, für die die Ereignisinformation bereitzustellen ist;
einem Ereignismitteilungsinformationsspeicher (13b), der dazu konfiguriert ist, die Ereignismitteilungsinformationen zu speichern, die in einer chronologischen Reihenfolge in einer Listenstruktur verknüpft sind, so dass die Ereignismitteilungsinformationsstücke seriell verknüpft sind, und die Ereignisinformationen werden für die zumindest eine Client-Vorrichtung (31) in chronologischer Reihenfolge bereitgestellt, in der die Ereignisse auftreten,
einem Client-Informationslistenspeicher (13a), der dazu konfiguriert ist, darin Informationen bezüglich der zumindest einen Client-Vorrichtung (31) zu speichern, für die die Ereignisinformationen bereitgestellt sind;
einer Mitteilungseinheit (11, 13), die dazu konfiguriert ist, ein Ereignisinformationsstück entsprechend einem ersten Ereignis aus vielen Ereignissen für die zumindest eine Client-Vorrichtung (31) bereitzustellen, deren Informationen in dem Client-Informationslistenspeicher (13a) gespeichert sind; und
einer Bestimmungseinheit (11, 19), die dazu konfiguriert ist, zu bestimmen, ob das Ereignisinformationsstück für die zumindest eine Client-Vorrichtung (31) normal ohne Fehler bereitgestellt wurde,
wobei die Mitteilungseinheit (11, 13) dazu konfiguriert ist, ein anderes Ereignisinformationsstück entsprechend einem zweiten Ereignis aus den vielen Ereignissen bereitzustellen, das nach dem ersten Ereignis gemäß den Ereignismitteilungsinformationen auftritt, wenn die Bestimmungseinheit (11, 19) bestimmt, dass das vorangehende Ereignisinformationsstück für die zumindest eine Client-Vorrichtung (31) normal ohne Fehler bereitgestellt wurde;
wobei die Ereignismitteilungsinformationen in dem Ereignismitteilungsinformationsspeicher (13b) darüber hinaus auf der Grundlage einer Ereignisart des Ereignisses gespeichert werden, das in dem Informationsverarbeitungsgerät (1) auftritt;
wobei die Ereignismitteilungsinformationen einen Zähler (Fig. 6D) aufweisen, der dazu konfiguriert ist, eine Zahl der zumindest einen Client-Vorrichtung (31) anzugeben, die in dem Client-Informationslistenspeicher (13a) gespeichert ist, und zwar auf der Grundlage der Ereignisart;
wobei das Informationsverarbeitungsgerät (1) mit einer ersten Subtrahiereinheit versehen ist, die dazu konfiguriert ist, die Zahl der Client-Vorrichtung (31), der die Ereignisinformationen normal ohne Fehler bereitgestellt wurden, von der Zahl zu subtrahieren, die in dem Zähler angegeben ist, wenn das Ereignisinformationsstück für die zumindest eine Client-Vorrichtung normal ohne Fehler bereitgestellt wurde; und
wobei das Informationsverarbeitungsgerät (1) des Weiteren Folgendes aufweist:
eine Client-Vorrichtungsinformationslöscheinheit (11), die dazu konfiguriert ist, die Client-Vorrichtungsinformationen der zumindest einen Client-Vorrichtung (31) zu löschen, für die bestimmt wurde, dass das Ereignisinformationsstück nicht bereitgestellt werden konnte, und zwar aus dem Client-Informationslistenspeicher (13a), und die Ereignismitteilungsinformationen, die das Ereignisinformationsstück haben;
eine zweite Subtrahiereinheit (11), die dazu konfiguriert ist, wenn die Client-Vorrichtungsinformationslöscheinheit (11) die Client-Informationen der zumindest einen Client-Vorrichtung (31) löscht, Eins von der Zahl zu subtrahieren, die in dem Zähler angegeben ist, und zwar bei den Ereignismitteilungsinformationen, die das Ereignisinformationsstück haben; und
eine dritte Subtrahiereinheit (11), die dazu konfiguriert ist, wenn die Client-Vorrichtungsinformationslöscheinheit (11) die Client-Informationen der zumindest einen Client-Vorrichtung (31) löscht, Eins von der Zahl zu subtrahieren, die in dem Zähler angegeben ist, und zwar bei den Ereignismitteilungsinformationen, die in der vorbestimmten Reihenfolge in dem Ereignismitteilungsinformationsspeicher (13b) so angeordnet sind, dass sie der Ereignismitteilungsinformation folgen, von deren Ereignisinformationen bestimmt ist, dass sie nicht bereitgestellt werden konnten.

2. Informationsverarbeitungsgerät gemäß Anspruch 1, mit:
einer Aufnahmeeinheit (11, 19), die dazu konfiguriert ist, eine Mitteilungsanfrage aufzunehmen (Fig. 4B), die durch die zumindest eine Client-Vorrichtung (31) abgegeben wird, um bei dem Informationsverarbeitungsgerät (1) anzufragen, die Ereignisinformationen für die zumindest eine Client-Vorrichtung (31) bereitzustellen; und
einem Anfrage-Client-Vorrichtungslistenspeicher (13a), der dazu konfiguriert ist, Client-Vorrichtungsinformationen bezüglich der zumindest einen Client-Vorrichtung (31) zu enthalten, die die Mitteilungsanfrage abgegeben hat,
wobei die Ereignismitteilungsinformationserzeugungseinheit (11, 13) die Client-Vorrichtungsinformationen inkludiert, die in dem Anfrage-Client-Vorrichtungslistenspeicher (13a) enthalten sind, um die Ereignismitteilungsinformationen bezüglich des Ereignisses zu erzeugen, das in dem Informationsverarbeitungsgerät (1) auftritt, so dass die Ereignisinformationen des Ereignisses für die zumindest eine Client-Vorrichtung (31) gemäß den Client-Vorrichtungsinformationen bereitgestellt werden, die in den Ereignismitteilungsinformationen enthalten sind, wenn die Ereigniserfassungseinheit (20a, 21a, 21b) das Ereignis erfasst.

3. Informationsverarbeitungsgerät gemäß Anspruch 2, mit:
einer Aufhebungsaufnahmeeinheit (11, 19), die dazu konfiguriert ist, eine Aufhebungsanfrage aufzunehmen (Fig. 4C), die durch die zumindest eine Client-Vorrichtung (31) abgegeben ist, um die Mitteilungsanfrage aufzuheben, so dass das Informationsverarbeitungsgerät (1) die Bereitstellung der Ereignisinformationen zu der zumindest einen Client-Vorrichtung (31) Einstellt; und
einer Client-Informationsbeseitigungseinheit (11), die dazu konfiguriert ist, die Client-Vorrichtungsinformationen der zumindest einen Client-Vorrichtung (31) zu beseitigen, die die Aufhebungsanfrage abgegeben hat, und zwar aus dem Anfrage-Client-Vorrichtungslistenspeicher (13a), und die Ereignismitteilungsinformationen, so dass verhindert wird, dass die Ereignisinformationen des Ereignisses der zumindest einen Client-Vorrichtung (31) bereitgestellt werden, die die Aufhebungsanfrage abgegeben hat.

4. Informationsverarbeitungsgerät gemäß Anspruch 1, 2 oder 3, mit
einem Ereignisinformationslöschsystem (11), das dazu konfiguriert ist, die Ereignismitteilungsinformationen, in denen die Zahl der Client-Vorrichtung (31) null ist, die in dem Zähler angegeben ist, aus dem Ereignismitteilungsinformationsspeicher (13b) zu löschen.

5. Verfahren zum Steuern eines Informationsverarbeitungsgeräts (1), das viele Ereignisse überwachen kann, die in dem Informationsverarbeitungsgerät (1) auftreten, und Ereignisinformationen bezüglich des jeweiligen Ereignisses für zumindest eine Client-Vorrichtung (31) bereitstellen kann, die mit dem Informationsverarbeitungsgerät (1) kommunizieren kann, mit:
Erfassen (20a, 21a, 21b) eines Ereignisses, das in dem Informationsverarbeitungsgerät (1) auftritt;
Erzeugen eines Ereignismitteilungsinformationsstückes (Fig. 6D), das die Ereignisinformationen und Informationen bezüglich der zumindest einen Client-Vorrichtung (31) enthält, für das die Ereignisinformationen bereitzustellen sind;
Speichern der Ereignismitteilungsinformationen, die in chronologischer Reihenfolge in einer Listenstruktur verknüpft sind, so dass die Ereignismitteilungsinformationsstücke seriell verknüpft sind, und die Ereignisinformationen bezüglich der jeweiligen Ereignisse werden für die zumindest eine Client-Vorrichtung (31) in der chronologischen Reihenfolge bereitstellt, in der die Ereignisse auftreten;
Speichern von Informationen bezüglich der zumindest einen Client-Vorrichtung (31), für die die Ereignisinformationen bereitzustellen sind, in einem Client-Informationslistenspeicher (13a);
Bereitstellen eines Ereignisinformationsstücks entsprechend einem ersten Ereignis aus den vielen Ereignissen für die zumindest eine Client-Vorrichtung (31), deren Informationen in dem Client-Informationslistenspeicher (13a) gespeichert sind;
Bestimmen, ob das Ereignisinformationsstück für die zumindest eine Client-Vorrichtung (31) normal ohne Fehler bereitgestellt wurde;
Bereitstellen eines anderen Ereignisinformationsstücks entsprechend einem zweiten Ereignis aus den vielen Ereignissen, das nach dem ersten Ereignis auftritt, gemäß den Ereignismitteilungsinformationen, wenn die Bestimmungseinheit bestimmt, dass das vorherige Ereignisinformationsstück für die zumindest eine Client-Vorrichtung (31) normal ohne Fehler bereitgestellt wurde; und
Speichern der Ereignismitteilungsinformationen in dem Ereignismitteilungsinformationsspeicher (13b) darüber hinaus auf der Grundlage einer Ereignisart des Ereignisses, das in dem Informationsverarbeitungsgerät (1) auftritt;
wobei die Ereignismitteilungsinformationen einen Zähler aufweisen, um eine Zahl der zumindest einen Client-Vorrichtung (31) anzugeben, die in dem Client-Informationslistenspeicher (13a) gespeichert ist, und zwar auf der Grundlage der Ereignisart; und
wobei das Verfahren die Zahl der Client-Vorrichtung (31), der die Ereignisinformationen normal ohne Fehler bereitgestellt wurden, von der Zahl subtrahiert, die in dem Zähler angegeben ist, wenn das Ereignisinformationsstück für die zumindest eine Client-Vorrichtung (31) normal ohne Fehler bereitgestellt wurde;
wobei das Verfahren des Weiteren Folgendes aufweist:
Löschen der Client-Vorrichtungsinformationen der zumindest einen Client-Vorrichtung (31), für die bestimmt wurde, dass das Ereignisinformationsstück nicht bereitgestellt werden konnte, aus dem Client-Informationslistenspeicher, und die Ereignismitteilungsinformationen, die das Ereignisinformationsstück haben; und
wenn die Client-Informationen der zumindest einen Client-Vorrichtung (31) gelöscht werden:
Subtrahieren von eins von der Zahl, die in dem Zähler angegeben ist, und zwar bei den Ereignismitteilungsinformationen, die das Ereignisinformationsstück haben; und
Subtrahieren von Eins von der Zahl, die in dem Zähler angegeben ist, und zwar bei den Ereignismitteilungsinformationen, die in der vorbestimmten Reihenfolge in dem Ereignismitteilungsinformationsspeicher so angeordnet sind, dass sie den Ereignismitteilungsinformationen folgend, von deren Ereignisinformationen bestimmt wurde, dass sie nicht bereitgestellt werden konnten.

6. Verfahren gemäß Anspruch 5, mit:
Aufnehmen einer Mitteilungsanfrage, die durch die zumindest eine Client-Vorrichtung (31) abgegeben wird, um bei dem Informationsverarbeitungsgerät (1) anzufragen, die Ereignisinformationen zu der zumindest einen Client-Vorrichtung (31) bereitzustellen; und
Speichern von Client-Vorrichtungsinformationen bezüglich der zumindest einen Client-Vorrichtung (31), die die Mitteilungsanfrage abgegeben hat, in einem Anfrage-Client-Vorrichtungslistenspeicher (13a); und
Inkludieren der Client-Vorrichtungsinformationen, die in dem Anfrage-Client-Vorrichtungslistenspeicher (13a) gespeichert sind, um die Ereignismitteilungsinformationen bezüglich des Ereignisses zu erzeugen, das in dem Informationsverarbeitungsgerät (1) auftritt, so dass die Ereignisinformationen des Ereignisses für die zumindest eine Client-Vorrichtung (31) gemäß den Client-Vorrichtungsinformationen bereitgestellt werden, die in den Ereignismitteilungsinformationen enthalten sind, wenn das Ereignis erfasst wird.

7. Verfahren gemäß Anspruch 6, mit:
Aufnehmen einer Aufhebungsanfrage, die durch die zumindest eine Client-Vorrichtung (31) abgegeben wird, um die Mitteilungsanfrage aufzuheben, so dass das Informationsverarbeitungsgerät (1) die Bereitstellung der Ereignisinformationen für die zumindest eine Client-Vorrichtung (31) einstellt; und
Beseitigen der Client-Vorrichtungsinformationen der zumindest einen Client-Vorrichtung (31), die die Aufhebungsanfrage abgegeben hat, aus dem Anfrage-Client-Vorrichtungslistenspeicher (13a), und der Ereignismitteilungsinformationen, so dass verhindert wird, dass die Ereignisinformationen des Ereignisses für die zumindest eine Client-Vorrichtung (31) bereitgestellt werden, die die Aufhebungsanfrage abgegeben hat.

8. Verfahren gemäß Anspruch 5, 6 oder 7, mit
Löschen der Ereignismitteilungsinformationen, in denen die Zahl der Client-Vorrichtung (31) null ist, die in dem Zähler angegeben ist, aus dem Ereignismitteilungsinformationsspeicher (13b).

9. Computerverwendbares Medium mit computerlesbaren Befehlen zum Steuern eines Informationsverarbeitungsgeräts (1) zum Überwachen von vielen Ereignissen, die in dem Informationsverarbeitungsgerät (1) auftreten, und zum Bereitstellen von Ereignisinformationen bezüglich der jeweiligen Ereignisse für die zumindest eine Client-Vorrichtung (31), die mit dem Informationsverarbeitungsgerät (1) kommunizieren kann, indem Schritte von einem der Ansprüche 5 bis 8 ausgeführt werden.

## Revendications

1. Appareil de traitement d'informations (1) comprenant :
une unité de détection d'événement (20a, 21a, 21b) configurée pour détecter des événements se produisant dans l'appareil de traitement d'informations (1) ;
une unité de génération d'informations de notification d'événement (11, 13) configurée pour générer un élément d'informations de notification d'événement (Fig 6D), qui inclut des informations d'événement concernant un événement respectif et des informations concernant au moins un dispositif client (31) auquel les informations d'événement doivent être fournies ;
un stockage d'informations de notification d'événement (13b) configuré pour stocker les informations de notification d'événement reliées par ordre chronologique dans une structure de liste, de sorte que les éléments des informations de notification d'événement soient reliés en série et que les informations d'événement soient fournies au au moins un dispositif client (31) dans l'ordre chronologique dans lequel les événements se produisent ;
un stockage de liste d'informations client (13a) configuré pour y stocker des informations concernant le au moins un dispositif client (31) auquel les informations d'événement doivent être fournies ;
une unité de notification (11, 13) configurée pour fournir un élément des informations d'événement correspondant à un premier événement parmi la pluralité d'événements au au moins un dispositif client (31), dont des informations sont stockées dans le stockage de liste d'informations client (13a) ; et
une unité de jugement (11, 19) configurée pour juger si l'élément des informations d'événement a été fourni au au moins un dispositif client (31) normalement sans échec,
dans lequel l'unité de notification (11, 13) est configurée pour fournir un autre élément des informations d'événement correspondant à un second événement parmi la pluralité d'événements, qui se produit à la suite du premier événement selon les informations de notification d'événement, lorsque l'unité de jugement (11, 19) juge que l'élément précédent des informations d'événement a été fourni au au moins un dispositif client (31) normalement sans échec ;
dans lequel les informations de notification d'événement sont stockées dans le stockage d'informations de notification d'événement (13b) en outre sur la base d'un type d'événement de l'événement se produisant dans l'appareil de traitement d'informations (1) ;
dans lequel les informations de notification d'événement incluent un compteur (Fig 6D) configuré pour indiquer un nombre du au moins un dispositif client (31) qui est stocké dans le stockage de liste d'informations client (13a) sur la base du type d'événement ;
dans lequel l'appareil de traitement d'informations (1) est pourvu d'une première unité de soustraction configurée pour soustraire le nombre du dispositif client (31), auquel ont été fournies les informations d'événement normalement sans échec du nombre indiqué dans le compteur, lorsque l'élément des informations d'événement a été fourni à un du au moins un dispositif client normalement sans échec ; et
dans lequel l'appareil de traitement d'informations (1) comprend en outre :
une unité d'effacement d'informations de dispositif client (11) configurée pour effacer les informations de dispositif client du au moins un dispositif client (31), auquel l'élément des informations d'événement a été jugé comme étant incapable d'être fourni, du stockage de liste d'informations client (13a) et les informations de notification d'événement ayant l'élément des informations d'événement ;
une deuxième unité de soustraction (11) configurée, lorsque l'unité d'effacement d'informations de dispositif client (11) efface les informations client du au moins un dispositif client (31), pour soustraire un du nombre indiqué dans le compteur dans les informations de notification d'événement ayant l'élément des informations d'événement ; et
une troisième unité de soustraction (11) configurée, lorsque l'unité d'effacement d'informations de dispositif client (11) efface les informations client du au moins un dispositif client (31), pour soustraire un du nombre indiqué dans le compteur dans les informations de notification d'événement qui sont agencées, dans l'ordre prédéterminé dans le stockage d'informations de notification d'événement (13b), pour suivre les informations de notification d'événement, dont des informations d'événement sont jugées comme étant incapables d'être fournies.

2. Appareil de traitement d'informations selon la revendication 1, comprenant :
une unité de réception (11, 19) configurée pour recevoir une demande de notification (Fig 4B), émise par le au moins un dispositif client (31) pour demander à l'appareil de traitement d'informations (1) de fournir les informations d'événement au au moins un dispositif client (31) ; et
un stockage de liste de dispositifs clients demandeurs (13a) configurée pour inclure des informations de dispositif client concernant le au moins un dispositif client (31) qui a émis la demande de notification,
dans lequel l'unité de génération d'informations de notification d'événement (11, 13) inclut les informations de dispositif client qui sont incluses dans le stockage de liste de dispositifs clients demandeurs (13a) pour générer les informations de notification d'événement concernant l'événement se produisant dans l'appareil de traitement d'informations (1) de sorte que les informations d'événement de l'événement soient fournies au au moins un dispositif client (31) selon les informations de dispositif client incluses dans les informations de notification d'événement, lorsque l'unité de détection d'événement (20a, 21a, 21b) détecte l'événement.

3. Appareil de traitement d'informations selon la revendication 2, comprenant :
une unité de réception d'annulation (11, 19) configurée pour recevoir une demande d'annulation (Fig 4C), émise par le au moins un dispositif client (31) pour annuler la demande de notification de sorte que l'appareil de traitement d'informations (1) cesse de fournir les informations d'événement au au moins un dispositif client (31) ; et
une unité de suppression d'informations client (11) configurée pour supprimer les informations de dispositif client du au moins un dispositif client (31) qui a émis la demande d'annulation du stockage de liste de dispositifs clients demandeurs (13a) et les informations de notification d'événement de sorte que les informations d'événement de l'événement soient empêchées d'être fournies au au moins un dispositif client (31) qui a émis la demande d'annulation.

4. Appareil de traitement d'informations selon la revendication 1, 2 ou 3, comprenant
un système d'effacement d'informations d'événement (11) configuré pour effacer les informations de notification d'événement, dans lesquelles le nombre du dispositif client (31) indiqué dans le compteur est zéro, du stockage d'informations de notification d'événement (13b).

5. Procédé pour commander un appareil de traitement d'informations (1) capable de surveiller une pluralité d'événements qui se produisent dans l'appareil de traitement d'informations (1) et de fournir des informations d'événement concernant chacun des événements à au moins un dispositif client (31) qui peut communiquer avec l'appareil de traitement d'informations (1), comprenant :
la détection (20a, 21a, 21b) d'un événement se produisant dans l'appareil de traitement d'informations (1) ;
la génération d'un élément d'informations de notification d'événement (Fig 6D), qui inclut les informations d'événement et des informations concernant le au moins un dispositif client (31) auquel les informations d'événement doivent être fournies ;
le stockage des informations de notification d'événement reliées par ordre chronologique dans une structure de liste, de sorte que les éléments des informations de notification d'événement soient reliés en série et que les informations d'événement concernant chacun des événements soient fournies au au moins un dispositif client (31) dans l'ordre chronologique dans lequel les événements se produisent ;
le stockage d'informations concernant le au moins un dispositif client (31) auquel les informations d'événement doivent être fournies dans un stockage de liste d'informations client (13a) ;
la fourniture d'un élément des informations d'événement correspondant à un premier événement parmi la pluralité d'événements au au moins un dispositif client (31), dont des informations sont stockées dans le stockage de liste d'informations client (13a) ;
le jugement de si l'élément des informations d'événement a été fourni au au moins un dispositif client (31) normalement sans échec ;
la fourniture d'un autre élément des informations d'événement correspondant à un second événement parmi la pluralité d'événements, qui se produit à la suite du premier événement, selon les informations de notification d'événement lorsque l'unité de jugement juge que l'élément précédent des informations d'événement a été fourni au au moins un dispositif client (31) normalement sans échec ; et
le stockage des informations de notification d'événement dans le stockage d'informations de notification d'événement (13b) en outre sur la base d'un type d'événement de l'événement se produisant dans l'appareil de traitement d'informations (1) ;
dans lequel les informations de notification d'événement incluent un compteur pour indiquer un nombre du au moins un dispositif client (31) qui est stocké dans le stockage de liste d'informations client (13a) sur la base du type d'événement ; et
dans lequel le procédé inclut la soustraction du nombre du dispositif client (31) auquel ont été fournies les informations d'événement normalement sans échec du nombre indiqué dans le compteur lorsque l'élément des informations d'événement a été fourni à un du au moins un dispositif client (31) normalement sans échec ;
le procédé comprenant en outre :
l'effacement des informations de dispositif client du au moins un dispositif client (31), auquel l'élément des informations d'événement a été jugé comme étant incapable d'être fourni, du stockage de liste d'informations client et des informations de notification d'événement ayant l'élément des informations d'événement ; et
lors de l'effacement des informations de dispositif client du au moins un dispositif client (31) :
la soustraction de un du nombre indiqué dans le compteur dans les informations de notification d'événement ayant l'élément des informations d'événement ; et
la soustraction de un du nombre indiqué dans le compteur dans les informations de notification d'événement qui sont agencées, dans l'ordre prédéterminé dans le stockage d'informations de notification d'événement, pour suivre les informations de notification d'événement, dont des informations d'événement sont jugées comme étant incapables d'être fournies.

6. Procédé selon la revendication 5, comprenant :
la réception d'une demande de notification, émise par le au moins un dispositif client (31) pour demander à l'appareil de traitement d'informations (1) de fournir les informations d'événement au au moins un dispositif client (31) ; et
le stockage d'informations de dispositif client concernant le au moins un dispositif client (31) qui a émis la demande de notification dans un stockage de liste de dispositifs clients demandeurs (13a) ; et
l'inclusion des informations de dispositif client qui sont stockées dans le stockage de liste de dispositifs clients demandeurs (13a) pour générer les informations de notification d'événement concernant l'événement se produisant dans l'appareil de traitement d'informations (1) de sorte que les informations d'événement de l'événement soient fournies au au moins un dispositif client (31) selon les informations de dispositif client incluses dans les informations de notification d'événement, lorsque l'événement est détecté.

7. Procédé selon la revendication 6, comprenant :
la réception d'une demande d'annulation, émise par le au moins un dispositif client (31) pour annuler la demande de notification de sorte que l'appareil de traitement d'informations (1) cesse de fournir les informations d'événement au au moins un dispositif client (31) ; et
la suppression des informations de dispositif client du au moins un dispositif client (31) qui a émis la demande d'annulation du stockage de liste de dispositifs clients demandeurs (13a) et des informations de notification d'événement de sorte que les informations d'événement de l'événement soient empêchées d'être fournies au au moins un dispositif client (31) qui a émis la demande d'annulation.

8. Procédé selon la revendication 5, 6 ou 7, comprenant
l'effacement des informations de notification d'événement, dans lesquelles le nombre du dispositif client (31) indiqué dans le compteur est zéro, du stockage d'informations de notification d'événement (13b).

9. Support utilisable par ordinateur comprenant des instructions lisibles par ordinateur pour commander un appareil de traitement d'informations (1) pour surveiller une pluralité d'événements qui se produisent dans l'appareil de traitement d'informations (1) et fournir des informations d'événement concernant chacun des événements à au moins un dispositif client (31) qui peut communiquer avec l'appareil de traitement d'informations (1) en exécutant des étapes de l'une quelconque des revendications 5 à 8.
